# EUROPÄISCHE PATENTSCHRIFT

(11) **EP 2 930 117 B1**
(45) Veröffentlichungstag und Bekanntmachung des Hinweises auf die Patenterteilung: **22.06.2016**
(21) Anmeldenummer: 15159222.7
(22) Anmeldetag: 16.03.2015
(51) Int. Cl.: B65B 17/02, B65B 35/44, B65B 35/54, B65B 63/08, B65G 47/68

(54) **VORRICHTUNG UND VERFAHREN ZUR HERSTELLUNG VON GEBINDEN AUS UNTEREINANDER DURCH EIN HAFTMITTEL VERKLEBTEN ARTIKELN**
DEVICE AND METHOD FOR MAKING PACKS COMPOSED OF ITEMS THAT ARE BONDED TO EACH OTHER BY A BONDING AGENT
DISPOSITIF ET PROCÉDÉ DE FABRICATION DE GERBES D'ARTICLES COLLÉES LES UNS AUX AUTRES À L'AIDE D'UN ADHÉSIF

(30) Priorität: 07.04.2014 DE 102014206672
(43) Veröffentlichungstag der Anmeldung: 14.10.2015
(73) Patentinhaber: Krones Aktiengesellschaft, 93073 Neutraubling (DE)
(72) Erfinder: Kollmuss, Manuel, 93073 Neutraubling (DE); Winzinger, Frank, 93073 Neutraubling (DE)
(74) Vertreter: Benninger, Johannes

(56) Entgegenhaltungen:
- DE-A1- 2 556 424
- DE-A1-102012 206 297
- DE-B3-102011 119 964
- DE-B3-102011 119 966

## Beschreibung

Die vorliegende Erfindung betrifft eine Vorrichtung zur Herstellung von Gebinden aus untereinander durch ein Haftmittel verklebten Artikeln gemäß den Merkmalen des Oberbegriffes des Anspruchs 1 sowie ein Verfahren zur Herstellung von Gebinden aus untereinander durch ein Haftmittel verklebten Artikeln gemäß den Merkmalen des Oberbegriffes des Anspruchs 12.

Es ist bekannt, Artikel, wie beispielsweise PET-Behälter (PET: Polyethylenterephthalat), zunächst mit einem Haftmittel zu versehen und im Anschluss daran aneinander zu pressen, um somit ein Gebinde aus mehreren Artikeln zu erzeugen.

Jeder Artikel eines Gebindes aus mehreren Artikeln weist eine als Aufstandsfläche des Artikels dienende Grundfläche, eine um die normal zur Grundfläche erstreckende Höhe des Artikels von der Grundfläche beabstandete Deckfläche, sowie eine den Umfang der Grundfläche mit dem Umfang der Deckfläche verbindende Mantelfläche auf.

Um aus mehreren, beispielsweise identischen Artikeln ein Gebinde aus mehreren durch ein Haftmittel untereinander verbundenen Artikeln zu erzeugen, ist es notwendig, die Artikel an wenigstens einem Teil ihrer im fertigen Gebinde aneinander stoßenden Flächen mit dem Haftmittel zu versehen und im Anschluss daran die in Bezug auf deren Gesamtheit zumindest zum Teil mit dem Haftmittel versehenen Flächen der zum Gebinde miteinander zu verbindenden Artikel aneinander zu pressen.

Bei diesen im fertigen Gebinde aneinander stoßenden Flächen handelt es sich im allgemeinen um Partien der Mantelflächen, welche im Vergleich mit verbleibenden Partien der Mantelflächen den größten Abstand von einer sich vom Schwerpunkt der Grundfläche zum Schwerpunkt der Deckfläche erstreckenden Mittelachse, entlang welcher die Schwerpunkte aller aufeinander folgender, parallel zur Grundfläche verlaufender Querschnittsflächen eines Artikels liegen, aufweisen.

Die im fertigen Gebinde aneinander stoßenden Flächen der Artikel umfassenden Partien der Mantelflächen der Artikel werden mit dem Haftmittel versehen, indem dies punkt- oder linienförmig aufgetragen wird, bevor im Anschluss hieran die Artikel entsprechend ihrer Anordnung im fertigen Gebinde gruppiert und zumindest für eine kurze Verweildauer aneinandergepresst werden, beispielsweise so lange, bis ein eine Aushärtezeit benötigendes Haftmittel eine Klebeverbindung zwischen den Artikeln hergestellt hat, die einer Belastung im weiteren Umgang mit dem Gebinde oder mit einem bis dato fertiggestellten Teil des Gebindes stand hält.

Ein sich bei der Herstellung eines beschriebenen, aufgrund der vermittels des Haftmittels hergestellten Klebeverbindungen auch als Klebegebinde bezeichneten Gebindes ergebender Nachteil ist, dass die Haftung des Haftmittels auf den im fertigen Gebinde aneinander stoßenden Flächen der Artikel stark vom Zustand dieser Flächen abhängt, während diese mit dem Haftmittel versehen werden.

Der erwähnte Nachteil ergibt sich beispielsweise in Verbindung mit Artikeln, deren die im fertigen Gebinde aneinander stoßenden Flächen der Artikel umfassenden Mantelflächen verschmutzt und/oder feucht und/oder nass sind, während sie mit Haftmittel versehen werden. Hierdurch kann es zu einer verringerten Anhaftung des Haftmittels auf den Mantelflächen und/oder zu einer verminderten Klebekraft des Haftmittels kommen.

Ursächlich für verschmutzte und/oder feuchte und/oder nasse Mantelflächen kann beispielsweise ein Reinigungs- oder Bodenkühlungs- oder ein so genannter Rinsprozess, bei dem eine Innenreinigung bis hin zu einer Innensterilisation von mit einem Inhaltsstoff zu befüllenden, als Behälter ausgeführten Artikeln vor deren Befüllung stattfindet, oder Kondensation von Luftfeuchtigkeit auf kälteren Oberflächen von Artikeln oder eine Kombination hieraus sein, wobei die Aufzählung keinen Anspruch erhebt, abschließend zu sein.

Durch DE 23 31 193 ist ein Gebinde aus in rechtwinklig zueinander verlaufenden Reihen und Zeilen angeordneten Artikeln bekannt, dessen Artikel durch ein Haftmittel unmittelbar miteinander verbunden sind. Bei den Artikeln kann es sich um Dosen oder um Flaschen handeln. Die Dosen weisen eine zylindrische Form auf. Die Flaschen sind abschnittsweise zylinder- und kegelstumpfförmig ausgebildet.

Durch DE 203 10 721 U1 ist ein Gebinde aus vermittels eines Haftmittels unmittelbar miteinander verbundenen Artikeln in genesteter Anordnung bekannt. Das Haftmittel kann einen Klebstoff oder einen Klebestreifen umfassen. Das Haftmittel kann im Bereich eines zylinderförmigen Abschnitts eines Artikels über dessen gesamten Umfang oder über dessen gesamte Höhe aufgetragen sein.

Durch DE 10 2009 044 271 A1 ist bekannt, im fertigen Gebinde aneinander stoßenden Flächen zu einem Gebinde zusammengestellter Artikel mit einem Haftmittel zu versehen und dadurch miteinander zu verkleben. Bei den Artikeln handelt es sich um PET-Behälter. Das Gebinde kann mit einer Umfassung versehen sein, welche die Artikel des Gebindes an dessen Peripherie umgibt. Die Umfassung weist mindestens eine Umreifung auf.

DE 10 2011 106 759 B3 beschreibt ein Verfahren zur Herstellung von Gebinden aus durch mit einem Haftmittel versehenen, unmittelbar miteinander verbundenen Artikeln. Die Artikel können Verjüngungen im Vergleich zu den die im fertigen Gebinde aneinander stoßenden Flächen der Artikel umfassenden Partien der Mantelflächen der Artikel aufweisen. Im Bereich der Verjüngungen kann zusätzlich eine die Artikel des Gebindes an dessen Peripherie umgebende Umfassung aus einem transparenten Material verlaufen.

Durch DE 10 2011 109 956 B3 ist bekannt, im fertigen Gebinde aneinander stoßende Flächen von Artikeln zylindrischer oder sphärischer Form eines Gebindes aus durch mit einem Haftmittel versehenen, unmittelbar miteinander verbundenen, in rechtwinklig zueinander verlaufenden Reihen und Zeilen angeordneten Artikeln abgeflacht auszuführen.

Durch DE 10 2011 119 964 B3 ist bekannt, ein Gebinde aus durch mit einem Haftmittel versehenen, unmittelbar miteinander verbundenen Artikeln herzustellen, indem zunächst mehrere aus mindestens zwei durch ein Haftmittel unmittelbar miteinander verbundenen Artikeln bestehende Teile des Gebindes hergestellt und anschließend mehrere Teile des Gebindes durch das Haftmittel zum fertigen Gebinde miteinander verbundenen werden.

Durch DE 10 2011 119 966 B3 ist bekannt, ein Gebinde aus durch mit einem Haftmittel versehenen, unmittelbar miteinander verbundenen Artikeln herzustellen, indem im fertigen Gebinde aneinander stoßende Flächen im Bereich wenigstens eines Transportsterns mit Haftmittel versehen und im unmittelbaren Anschluss daran die mit Haftmittel versehenen Artikel zu dem Gebinde aneinandergepresst werden. Damit die mit Haftmittel versehenen, im fertigen Gebinde aneinander stoßenden Flächen beim Aneinanderpressen tatsächlich zueinander finden, kann die Ausleitung aus dem Transportstern unter verdrehsicherer Haltung der Behälter erfolgen.

DE 10 2011 119 967 B3 ist bekannt, mit einem Haftmittel versehene, zu einem Gebinde aus durch mit einem Haftmittel versehenen, unmittelbar miteinander verbundenen Artikeln zusammenzuführende Artikel durch Rotation um deren Mittelachsen auszurichten.

Durch DE 10 2012 005 925 B3 ist bekannt, ein Gebinde aus durch mit einem Haftmittel versehenen, unmittelbar miteinander verbundenen Artikeln herzustellen. Dabei werden in mehreren einspurigen Artikelströmen aus unmittelbar aufeinander folgenden Artikeln transportierte Artikel mittels längs und quer zu einer Transportrichtung beweglicher sowie rotierbarer Kopfführungen zunächst parallel zueinander, dann schräg zueinander und anschließend wiederum parallel zueinander fortbewegt. Während die in mehreren einspurigen Artikelströmen aus unmittelbar aufeinander folgenden Artikeln transportierten Artikel schräg zueinander fortbewegt werden, werden im fertigen Gebinde aneinander stoßenden Flächen mit einem Haftmittel versehen.

Aufgabe der Erfindung ist, eine verbesserte Vorrichtung zur Herstellung von Gebinden aus untereinander durch einen Haftmittelauftrag verklebten Artikeln gemäß den Merkmalen des Oberbegriffes des Anspruchs 1 sowie ein verbessertes Verfahren zur Herstellung von Gebinden aus untereinander durch einen Haftmittelauftrag verklebten Artikeln anzugeben, bei denen zumindest der bezüglich des Standes der Technik erwähnte Nachteil nicht auftritt.

Die obige Aufgabe wird jeweils durch die Merkmale der unabhängigen Ansprüche gelöst. Weitere vorteilhafte Ausgestaltungen werden durch die Unteransprüche beschrieben.

Ein erster Gegenstand der Erfindung betrifft demnach eine Vorrichtung zur Herstellung von Gebinden aus untereinander durch ein Haftmittel verbundenen Artikeln.

Die Artikel des Gebindes sind untereinander durch ein Haftmittel, beispielsweise mittels eines oder mehrerer Kleber an kurz auch als Klebestellen bezeichneten Partien von Grund- und Deckflächen der Artikel an deren Umfang jeweils verbindenden Mantelflächen umfassenden oder von diesen umfassten Flächen verbunden.

An den Klebestellen, an denen die Artikel durch das Haftmittel miteinander zum Gebinde verbunden werden bzw. im fertigen Gebinde verbunden sind, stoßen die Artikel im fertigen Gebinde zumindest annähernd, beispielsweise lediglich um das Haftmittel voneinander beabstandet aneinander.

Die Vorrichtung zeichnet sich durch eine Trocknungseinrichtung wenigstens der in Bezug auf deren Gesamtheit zumindest zum Teil mit Haftmittel zu versehenden Klebestellen aus, welche insbesondere unmittelbar vor einer Einrichtung angeordnet ist, mit welcher zumindest ein Teil der Gesamtheit der Klebestellen von zu einem Gebinde miteinander zu verbindenden Artikeln mit Haftmittel versehen werden.

Die Trocknungseinrichtung kann hinsichtlich deren Einwirkungsdauer auf die einzelnen Artikel und/oder hinsichtlich der Intensität deren Einwirkung auf die einzelnen Artikel sensorgesteuert betrieben sein. Die Vorrichtung umfasst hierzu mindestens einen im Bereich der Trocknungseinrichtung angeordneten Sensor zur Erfassung von Feuchtigkeit und/oder Nässe wenigstens an den in Bezug auf deren Gesamtheit zumindest zum Teil mit Haftmittel zu versehenden Klebestellen. Hierdurch kann festgestellt werden, ob die Klebestellen und/oder die Oberflächen der untereinander durch ein Haftmittel zu einem Gebinde zu verbindenden Artikel feucht und/oder nass sind und beispielsweise zwecks Energieeinsparung die Trocknungseinrichtung nur dann betrieben wird, wenn festgestellt wurde, dass die Klebestellen und/oder die Oberflächen der untereinander durch ein Haftmittel zu einem Gebinde zu verbindenden Artikel feucht und/oder nass sind.

Der Sensor kann beispielsweise eine Kamera umfassen und/oder von einer solchen umfasst sein, mit welcher auf optischen Weg - insbesondere über eine Bildauswertesoftware - erkannt werden kann, ob sich an den Stellen Tropfen gebildet haben. Dieses Verfahren ist insbesondere geeignet, um Spritzer auf den Artikeln zu erkennen, welche von einem Rinsprozess oder einer Kühlung herrühren.

Eine andere Möglichkeit zur Feststellung von Feuchtigkeit auf den Artikeln stellt das Messen der Luftfeuchte der Umgebungsluft in der Nähe der Transportstrecke der Artikel dar. Über die Umgebungstemperatur, eine Temperatur eines Inhaltstoffs oder Guts, mit dem die Artikel befüllt sind bzw. der Temperatur an der Oberfläche der Artikel, die Transportgeschwindigkeit und/oder die Zeit, welche die Artikel von einer Einrichtung zur Befüllung, beispielsweise einer Füllmaschine zur Haftmittelauftragung benötigen, kann ermittelt werden, ob sich Kondensat auf der Oberfläche gebildet haben kann. Dies kann beispielsweise durch Versuche ermittelt werden. Vorzugsweise beziehen sich solche alternativen Möglichkeiten auf Varianten, in denen bestimmte Einflussfaktoren immer konstant sind - beispielsweise bei einer klimatisierten Abfüllhalle.

Der Sensor weist Ausgangssignale auf, welche zumindest dem Vorhandensein und/oder dem Nichtvorhandensein von Feuchtigkeit und/oder Nässe wenigstens im Bereich der Klebestellen der zu einem Gebinde mittels Haftmittel untereinander zu verbindendne Artikel proportional sind.

Darüber hinaus kann die Vorrichtung eine mit der Trocknungseinrichtung verbundene Steuerungseinrichtung umfassen, welche mit dem mindestens einen Sensor verbunden sein kann, zumindest jedoch dessen Ausgangssignale empfängt, und abhängig von den Ausgangssignalen die Einwirkungsdauer und/oder die Intensität der Einwirkung wenigstens von Teilen der Trocknungseinrichtung auf die einzelnen Artikel steuert.

Die Trocknungseinrichtung kann nicht nur die Klebestellen umfassende Partien trocknen, sondern alternativ die gesamten Mantelflächen der vermittels Haftmittel zu einem Gebinde miteinander zu verbindenden Artikel und/oder durch deren Mantelflächen sowie deren Grund- und/oder Deckflächen gebildete Oberflächen der Artikel.

Vorteilhaft kann dies unter Anderem beispielsweise bei der Verarbeitung von Mehrwegartikeln von Vorteil sein, wie etwa zum Entfernen alter Haftmittelreste.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Trocknungseinrichtung eine Einrichtung zur Reinigung wenigstens der in Bezug auf deren Gesamtheit zumindest zum Teil mit Haftmittel zu versehenden Klebestellen der Artikel vorgelagert sein, welche Teil der Vorrichtung sein kann. Hierdurch können nicht nur die Nachteile des Standes der Technik hinsichtlich feuchter und/oder nasser, die Klebestellen umfassender Mantelflächen behoben werden, sondern zusätzlich auch noch die Haft- bzw. Klebewirkung des Haftmittels an den Klebestellen beeinträchtigende Verschmutzungen beseitigt werden.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Trocknungseinrichtung eine Einrichtung zur Herstellung von Artikeln, beispielsweise eine Streckblaseinrichtung zur Herstellung von mit einem Inhaltsstoff zu befüllenden, als Behälter ausgeführten Artikeln vorgelagert sein, welche Teil der Vorrichtung sein kann.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Einrichtung zur Herstellung von Artikeln eine Einrichtung zur Befüllung der zuvor hergestellten Artikel nachgeordnet sein, welche Teil der Vorrichtung sein kann, und welche wiederum in Bezug auf den Transportweg der Trocknungseinrichtung vorgelagert ist.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Einrichtung zur Befüllung der zuvor hergestellten Artikel eine Einrichtung zum Verschließen der zuvor befüllten Artikel beispielsweise vermittels jeweils eines Deckels nachgeordnet sein, welche Teil der Vorrichtung sein kann, und welche wiederum in Bezug auf den Transportweg der Trocknungseinrichtung vorgelagert ist.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Trocknungseinrichtung eine Einrichtung zur Innenreinigung bis hin zu einer Innensterilisation von mit einem Inhaltsstoff zu befüllenden, als Behälter ausgeführten Artikeln vor deren Befüllung vorgelagert sein, welche Teil der Vorrichtung sein kann. Denkbar ist beispielsweise eine Innenreinigung bis hin zu einer Innensterilisation vermittels gasförmigem Wasserstoffperoxid und/oder Peressigsäure und/oder Elektronenstrahlung und/oder Ultraschallwellen und/oder Mikrowellenstrahlung und/oder einem Wassernebel und/oder -dampf und/oder mechanischen Mitteln, wie beispielsweise einem Spritzer auf den Oberflächen der Artikel vermeidenden feuchten oder nassen Schwamm.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der beispielsweise als Streckblaseinrichtung zur Herstellung von mit einem Inhaltsstoff zu befüllenden, als Behälter ausgeführten Artikeln ausgebildeten Einrichtung zur Herstellung von Artikeln eine Einrichtung zur Kühlung zumindest der Grundflächen der Artikel nachgeordnet sein, welche wiederum in Bezug auf den Transportweg der Trocknungseinrichtung sowie einer gegebenenfalls vorgesehenen Einrichtung zur Befüllung der zuvor hergestellten Artikel vorgelagert ist. Hierdurch werden stabilere Grundflächen insbesondere von als PET-Flaschen ausgeführten Artikeln erhalten. Auch diese Einrichtung zur Kühlung zumindest der Grundflächen der Artikel kann Teil der Vorrichtung sein. Da relativ viel Material im Bereich der Grundfläche bei PET-Flschen vorhanden ist, welches nach der Herstellung noch relativ warm sein kann, wird zur Vermeidung von bei einer Befüllung mit Inhaltsstoff möglicherweise entstehenden Ausbeulungen auf Grund des Fülldrucks speziell dieser Bereich gekühlt.

Beispielsweise kann die Bodenkühlung durch ein Bespritzen und/oder berieseln wenigstens der Grundflächen mit Wasser geschehen.

Die Bodenkühlung kann wie in EP 2 000 285 A2 vorgesehen sein, deren Inhalt zum Bestandteil dieser Anmeldung gemacht wird. Demnach wird zumindest zeitweise ein Wasserstrahl auf den Bodenbereich von als PET-Flaschen ausgeführten Artikeln gerichtet. Vorstellbar sind aber auch Düsen, welche die Kühlflüssigkeit zerstäuben oder ein Tauchbad, durch welches die Böden der als Flaschen ausgeführten Artikeln hindurchbewegt werden.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Trocknungseinrichtung eine Einrichtung zur Vereinzelung der entlang des Transportwegs beförderten und zu einem Gebinde miteinander vermittels eines Haftmittels zu verbindenden Artikel durch Abtrennung Artikel um Artikel von einem oder mehreren Artikelströmen aus jeweils unmittelbar hintereinander fortbewegten Artikeln vorgelagert sein. Die Einrichtung zur Vereinzelung kann ebenfalls Teil der Vorrichtung sein.

Vorzugsweise werden die Artikel einzeln hintereinander und besonders bevorzugt einspurig zumindest im Bereich der Trocknungseinrichtung transportiert. Ein sich hierdurch ergebender Vorteil ist, dass dadurch alle Oberflächen der Artikel frei zugänglich sind.

Grundsätzlich ist auch denkbar, dass die Gebinde sukzessive anwachsen, wobei zunächst Teile des fertigen Gebindes durch Verbindung mehrerer Artikel mittels Haftmittel hergestellt werden, welche Teile anschließend mittels Haftmittel zum fertigen Gebinde miteinander verbunden werden. Auch kann eine Trocknungseinrichtung für Klebestellen solcher bereits aus mehreren untereinander durch Haftmittel verbundene Artikel gebildeter Teile eines Gebindes vorgesehen sein.

In Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, kann der Einrichtung, mit welcher zumindest ein Teil der Gesamtheit der Klebestellen von zu einem Gebinde miteinander zu verbindenden Artikeln mit Haftmittel versehen werden, eine Einrichtung zum Zusammenführen und Zusammenpressen von Artikeln an deren in Bezug auf die Gesamtheit deren Klebestellen zumindest zum Teil mit Haftmitteln versehenen Klebestellen entsprechend deren Anordnung und Ausrichtung im fertigen Gebinde nachgeordnet sein. Die Ausrichtung erfolgt bevorzugt durch Beibehaltung und/oder Änderung der Orientierung einzelner und/oder mehrerer Artikel in Bezug auf deren normal auf deren als Aufstandsflächen dienenden Grundflächen aufstehende Hochachsen. Eine Beibehaltung und/oder Änderung der Orientierung erfolgt bevorzugt durch Rotation einzelner und/oder mehrerer Artikel um deren Hochachsen.

Das Zusammenpressen erfolgt dabei bevorzugt mindestens so lange, bis ein eine Aushärtezeit benötigendes Haftmittel eine Klebeverbindung zwischen den Artikeln hergestellt hat, die einer Belastung im weiteren Umgang mit dem Gebinde oder einem bis dato hergestellten Teil eines Gebindes stand hält. Unter Pressen im Sinn der vorliegenden Erfindung wird auch ein leichtes Aneinanderdrücken verstanden, so dass das auf einen Artikel aufgetragene Haftmittel zumindest den anderen Behälter berührt.

Der Einrichtung zum Zusammenführen und Zusammenpressen von Artikeln an deren in Bezug auf die Gesamtheit deren Klebestellen zumindest zum Teil mit Haftmitteln versehenen Klebestellen kann in Bezug auf einen Transportweg der Artikel ein Palettierer nachgeordnet sein, welcher fertige Gebinde zu Stapellagen gruppiert und an einem Stapelplatz zu einem aus mehreren Stapellagen bestehenden Stapel aufstapelt.

Wichtig ist hervorzuheben, dass die Vorrichtung eine in Bezug auf einen Transportweg der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, der Trocknungseinrichtung vorgelagerte Einrichtung zum Versehen der Artikel mit Informationen umfassen kann, welche Teil der Vorrichtung sein kann.

Bei der Information kann es sich beispielsweise um ein Design und/oder ein Bild und/oder einen Markennamen und/oder eine Angabe von Inhaltsstoffen und/oder Nährwerten und/oder eines Verzehrdatums und/oder Transporthinweisen und/oder Gefahrenhinweisen und/oder Lagerungshinweisen und/oder Verarbeitungshinweisen und/oder Gebrauchshinweisen und/oder Adressangaben, wie beispielsweise des herstellenden und/oder abpackenden Betriebs und/oder einer Handelsniederlassung handeln, um nur einige denkbare Informationen aufzuzeigen.

Eine erste Möglichkeit, Artikel mit Informationen zu versehen sind auf der Mantelfläche aufgebrachte, typischerweise zumindest zum Teil aufgeklebte Informationsträger. Ein typisches Beispiel für einen entsprechenden Informationsträger ist ein Etikett, eine Banderole. Ein in Verbindung mit Artikeln der Lebensmittel- und Getränkeindustrie noch wenig weit verbreitetes Beispiel, wahlweise in Kombination mit einem Etikett, ist ein aufgeklebtes, so genanntes RFID-Tag, welches einen Transponder mit einer Antenne, einem Transciever bestehend aus einem analogen Schaltkreis zum Empfangen und Senden, sowie einen digitalen Schaltkreis und mindestens einen einmal beschreibbaren und oft lesbaren, permanenten Speicher aufweist.

Umgangssprachlich auch Funketiketten genannt, stellt RFID (radio-frequency identification) eine Technologie für Sender-Empfänger-Systeme zum automatischen und berührungslosen Identifizieren und Lokalisieren von Artikeln vermittels Radiowellen dar. Sie erleichtert das Erfassen von Daten erheblich.

Ein RFID-System besteht aus dem RFID-Tag, welches sich am oder im Artikel befindet und in dessen Speicher zumindest einen kennzeichnenden Code enthält, sowie einem Lesegerät zum Auslesen dieser Kennung.

Die Kopplung geschieht durch vom Lesegerät erzeugte elektromagnetische Wechselfelder geringer Reichweite oder durch hochfrequente Radiowellen. Damit werden nicht nur Daten übertragen, sondern auch das RFID-Tag mit Energie versorgt.

Informationen können direkt auslesbar im Speicher des RFID-Tags abgelegt sein, oder sie können auf mindestens einem Server und/oder in mindestens einer Datenbank abgelegt und vermittels des im Speicher des RFID-Tags abgelegten Codes identifizierbar und dadurch mindestens einem Artikel zugeordnet sein.

Eine zweite Möglichkeit, Artikel mit Informationen zu versehen, ist der so genannte Direktdruck. Hierbei werden die Informationen drucktechnisch ein- oder mehrfarbig direkt auf die Mantelfläche aufgebracht. Hierbei kann es sich um dieselben Informationen handeln, wie sie auch auf einem oder mehreren Informationsträgern sichtbar bereitgestellt werden können.

Beim Direktdruck werden abhängig davon, ob eine Information in einem Einfach- oder in einem Mehrfachdruck aufgebracht wird, in einem oder ich mehreren Druckprozessen ein oder mehrere Druckstoffe auf die Oberfläche eines Artikels aufgebracht.

Eine Sonderform stellen auch hierbei RFID-Tags dar, welche ebenfalls im Direktdruck über ein spezielles Druckverfahren stabiler Schaltungen aus Polymeren direkt auf der Mantelfläche von Artikeln hergestellt werden können.

Die Artikel können bevor sie mit Informationen versehen werden, oder im Anschluss hieran, jedoch bevor deren Klebestellen zumindest zum Teil mit Haftmittel versehen werden, mit einem Inhalt befüllt werden.

Die Trocknungseinrichtung umfasst bevorzugt eine Wärmeeintragungseinrichtung, welche zur Beseitigung von Feuchtigkeit und/oder Nässe wenigstens an den Klebestellen auf den Oberflächen der vermittels eines Haftmittels zu einem Gebinde miteinander zu verbindenden Artikel eine eine beispielsweise durch Verdunstung stattfindende Trocknung begünstigende, im Vergleich zu einem in der Umgebung der Vorrichtung ruhenden Artikel höhere Wärmeübertragung wenigstens an den Klebestellen und/oder einer an den Klebestellen niedergeschlagenen Feuchtigkeit und/oder Nässe bewirkt und sicherstellt.

Unter Wärmeübertragung zumindest im Sinne der Erfindung fallen Wärmestrahlung, Wärmeleitung sowie Wärmeübergang von einer festen Oberfläche an ein an diese angrenzendes Fluid, insbesondere Luft.

Mit zunehmender Wärmeübertragung trocknen feuchte und/oder nasse Klebestellen schneller ab.

Die Wärmeeintragungseinrichtung kann Mittel zur Wärmestrahlung zumindest auf die Klebestellen und/oder auf an den Klebestellen niedergeschlagene Feuchtigkeit und/oder Nässe umfassen.

Beispielsweise kann die Wärmeeintragungseinrichtung einen oder mehrere Heizstrahler, vorzugsweise kurz als Infrarotstrahler (IR-Strahler) bezeichnete Infrarotheizstrahler als Mittel zur Wärmestrahlung umfassen. Der oder die beispielsweise als IR-Strahler ausgeführten Heizstrahler können zumindest entlang eines Teils eines Transportwegs der Artikel zu der Einrichtung, mit welcher zumindest ein Teil der Gesamtheit der Klebestellen von zu einem Gebinde miteinander zu verbindenden Artikeln mit Haftmittel versehen werden, angeordnet sein.

Die Wärmeeintragungseinrichtung kann alternativ oder zusätzlich eine Steigerung des Wärmeübergangs zumindest zwischen den Klebestellen und/oder auf an den Klebestellen niedergeschlagener Feuchtigkeit und/oder Nässe und die vermittels eines Haftmittels zu einem Gebinde miteinander zu verbindenden Artikel umgebenden Luft im Vergleich zu einem in der Umgebung der Vorrichtung ruhenden Artikel vorsehen.

Beispielsweise kann die Wärmeeintragungseinrichtung wenigstens eine Heizeinrichtung umfassen, welche zumindest die die entlang des Transportwegs transportierten Artikel umgebende Luft auf eine Temperatur oberhalb einer Temperatur in der Umgebung der Vorrichtung erwärmt. Die mindestens eine beispielsweise in Form einer Heizwendel und/oder eines Ofens und/oder eines Wärmetauschers, welcher in einem anderen Prozess, beispielsweise in einem Streckblasprozess anfallende Abwärme der Trocknungseinrichtung zugänglich macht, ausgeführte Heizeinrichtung kann zumindest entlang eines Teils eines Transportwegs der Artikel zu der Einrichtung, mit welcher zumindest ein Teil der Gesamtheit der Klebestellen von zu einem Gebinde miteinander zu verbindenden Artikeln mit Haftmittel versehen werden, angeordnet sein.

Eine alternative oder zusätzlich Möglichkeit zur Steigerung des Wärmeübergangs ergibt sich durch eine Erhöhung einer Relativbewegung zwischen der die entlang des Transportwegs transportierten Artikel umgebenden Luft und zumindest den Klebestellen und/oder der auf an den Klebestellen niedergeschlagenen Feuchtigkeit und/oder der auf an den Klebestellen niedergeschlagenen Nässe.

Eine zunehmende Relativbewegung zwischen einer Oberfläche und einem an diese angrenzenden, flüssigen oder gasförmigen Fluid steigert die in die den Wärmeübergang zwischen der festen Oberfläche und dem an diese angrenzenden Fluid beschreibende Nusselt-Zahl einfließende Reynolds-Zahl.

Alternativ oder zusätzlich kann die Ausrichtung der Artikel in Bezug auf deren Relativbewegung gegenüber umgebender Luft beeinflusst werden, um bei gegebener Relativbewegung den Wärmeübergang zwischen der Luft und zumindest den Klebestellen und/oder der an den Klebestellen niedergeschlagenen Feuchtigkeit und/oder der an den Klebestellen niedergeschlagenen Nässe zu steigern.

Zur Umsetzung dieser drei erwähnten Möglichkeiten, den Wärmeübergang zu steigern, kann die Wärmeeintragungseinrichtung eines oder mehrere der nachfolgend beschriebenen Merkmale aufweisen.

Die Wärmeeintragungseinrichtung kann beispielsweise Mittel zur Beeinflussung und Veränderung der Ausrichtung der entlang des Transportwegs transportierten Artikel entsprechend einer maximalen Nusselt-Zahl zumindest hinsichtlich der Klebestellen und/oder der an den Klebestellen niedergeschlagenen Feuchtigkeit und/oder der an den Klebestellen niedergeschlagenen Nässe umfassen.

Dementsprechend kann die Wärmeeintragungseinrichtung den Umstand nutzen, dass eine Relativbewegung der Artikel entlang des Transportwegs gegenüber die Artikel umgebender Luft hinsichtlich der Trocknung feuchter und/oder nasser Klebestellen keinesfalls für alle Ausrichtungen der Artikel identisch ist, sondern vielmehr durch eine Veränderung deren Ausrichtungen beeinflusst werden kann.

Alternativ oder zusätzlich ist denkbar, dass die Wärmeeintragungseinrichtung Mittel zur zusätzlichen rotatorischen und/oder translatorischen Bewegung der entlang des Transportwegs transportierten und dementsprechend entlang des Transportwegs fortbewegten Artikel umfasst. So ist beispielsweise eine Erhöhung des Wärmeübergangs durch Rotation der Artikel beispielsweise um deren normal auf deren als Aufstandsflächen dienenden Grundflächen aufstehende Hochachsen denkbar, wobei gleichzeitig zu größeren Tropfen oder zu stärkeren Filmen niedergeschlagene Feuchtigkeit und/oder Nässe durch deren Trägheit abgeschüttelt wird, ähnlich Regen- und/oder Gischttropfen auf einer auch als Klarsichtscheibe oder Kent-Scheibe bezeichneten Schleuderscheibe.

Alternativ oder zusätzlich ist denkbar, dass die Wärmeeintragungseinrichtung Mittel zur Erzeugung einer Luftströmung umfasst, welche Luftströmung auf die entlang des Transportwegs fortbewegten Artikel einwirkt, indem sie diese beispielsweise umspült. Die Mittel zur Erzeugung einer Luftströmung können zumindest entlang eines Teils eines Transportwegs der Artikel zu der Einrichtung, mit welcher zumindest ein Teil der Gesamtheit der Klebestellen von zu einem Gebinde miteinander zu verbindenden Artikeln mit Haftmittel versehen werden, angeordnet sein.

Die Luftströmung kann dabei so stark ausgebildet sein, dass sie in der Lage ist, einen oder mehrere Tropfen und/oder einen Feuchtigkeitsfilm zumindest von einer Klebestelle abzulösen und mit sich zu reißen.

Die Mittel zur Erzeugung einer Luftströmung, welche auf die entlang des Transportwegs fortbewegten Artikel einwirkt, können beispielsweise ein Gebläse und/oder beispielsweise eine oder mehrere, ein- oder beidseitig zumindest eines Teils des Transportwegs der Artikel angeordnete, stationäre und/oder mit den Artikeln mitbewegte Kalt- und/oder Heißluftdüsen umfassen, welche - wenn mehrere entsprechende Düsen vorgesehen sind - individuell ansteuerbar sein können.

Beispielsweise kann die Wärmeeintragungseinrichtung mindestens ein Kalt- und/oder Warm- und/oder Heißluftgebläse als Mittel zur Erzeugung einer Luftströmung, welche auf die entlang des Transportwegs fortbewegten Artikel einwirkt, umfassen. Im Falle einer Ausführung als Warm- und/oder Heißluftgebläse umfassen die Mittel zur Erzeugung einer Luftströmung zugleich eine Heizeinrichtung, welche zumindest die die entlang des Transportwegs transportierten Artikel umgebende Luft auf eine Temperatur oberhalb einer Temperatur in der Umgebung der Vorrichtung erwärmt, oder Teile einer solchen Heizeinrichtung oder werden von einer solchen Heizeinrichtung oder von Teilen einer solchen Heizeinrichtung umfasst.

Das mindestens eine Kalt- und/oder Warm- und/oder Heißluftgebläse und/oder eine oder mehrere, ein- oder beidseitig zumindest eines Teils des Transportwegs der Artikel angeordnete, stationäre und/oder mit den Artikeln mitbewegte Kalt- und/oder Heißluftdüsen kann zumindest entlang eines Teils des Transportwegs angeordnet sein.

Beispielsweise kann die Trocknungseinrichtung etwa als Teil der Wärmeeintragungseinrichtung, beispielsweise etwa als Teil von Mitteln zur Beeinflussung und Veränderung der Ausrichtung der entlang des Transportwegs transportierten Artikel entsprechend einer maximalen Nusselt-Zahl, Mittel zum Drehen der Artikel um auf deren als Aufstandsflächen dienenden Grundflächen aufstehende Hochachsen umfassen. Hierdurch kann eine zuverlässige Trocknung beispielsweise mehrerer über den Umfang eines Artikels verteilt angeordneter Klebestellen beispielsweise vermittels nur einseitig des Transportwegs angeordneter Düsen sichergestellt werden.

In Verbindung beispielsweise mit einer rotatorischen Beeinflussung und Veränderung der Ausrichtung der Artikel beispielsweise entsprechend einer maximalen Nusselt-Zahl lässt sich so selbst unter Verzicht auf eine für einen Inhalt der Artikel gegebenenfalls nachteilige Einwirkung von Heißluft und/oder Wärmestrahlung eine einwandfreie Trocknung vermittels eines Haftmittels zu einem Gebinde miteinander zu verbindender Artikel unter Beseitigung von Feuchtigkeit und/oder Nässe wenigstens an deren Klebestellen erzielen.

Die Trocknungseinrichtung kann einen beispielsweise durch Eingangs- und/oder Ausgangsluken und/oder -schleusen zumindest zeitweilig verschließbaren, sich entlang wenigstens eines Teils eines Transportwegs der Artikel zu der Einrichtung, mit welcher zumindest ein Teil der Gesamtheit der Klebestellen von zu einem Gebinde miteinander zu verbindenden Artikeln mit Haftmittel versehen werden, erstreckenden Tunnel umfassen. In dem Tunnel können bevorzugt zumindest Teile einer Wärmeeintragungseinrichtung angeordnet und/oder zumindest zum Teil untergebracht sein. Durch die Eingangs- und/oder Ausgangsluken und/oder -schleusen können die entlang des Transportwegs fortbewegten Artikel in den Tunnel ein- und an dessen Ende wieder austreten, wobei die vermittels eines Haftmittels zu einem Gebinde miteinander zu verbindenden Artikel in dem Tunnel die Beseitigung von Feuchtigkeit und/oder Nässe wenigstens an den Klebestellen auf ihren Oberflächen erfahren. Der Tunnel verhindert das unkontrollierte Entweichen erwärmter Luft und/oder strömender Luft und/oder von Wärmestrahlung und vermindert hierdurch den Energieverbrauch der Vorrichtung. Darüber hinaus verhindert der Tunnel das unkontrollierte Entweichen von Feuchtigkeit und/oder Nässe, die bei der Beseitigung von Feuchtigkeit und/oder Nässe wenigstens an den Klebestellen vermittels eines Haftmittels zu einem Gebinde miteinander zu verbindenden Artikel abgeführt werden muss.

Insbesondere kann der Tunnel ein Umluftsystem aufweisen, mittels welchem warme oder heiße Luft nach der Trocknung eines Artikels zur Trocknung eines nächsten Artikels wiederverwendet wird.

Wichtig ist hervorzuheben, dass die Trocknungseinrichtung oder ein oder mehrere Teile der Trocknungseinrichtung in die Einrichtung, mit welcher zumindest ein Teil der Gesamtheit der Klebestellen von zu einem Gebinde miteinander zu verbindenden Artikeln mit Haftmittel versehen werden, integriert bzw. von dieser umfasst sein kann, oder diese umfassen kann.

Beispielsweise können beispielsweise Klebepistolen oder Sprühdüsen für das Haftmittel und beispielsweise IR-Strahler und/oder Kalt- und/oder Heißluftdüsen getrennt ansteuerbar beispielsweise koaxial oder insbesondere unmittelbar nebeneinander angeordnet sein.

Umfasst die Einrichtung, mit welcher zumindest ein Teil der Gesamtheit der Klebestellen von zu einem Gebinde miteinander zu verbindenden Artikeln mit Haftmittel versehen werden, beispielsweise Klebepistolen oder Sprühdüsen, mit denen die Klebestellen berührungslos mit Haftmittel versehen werden, so können in diese beispielsweise Klebepistolen oder Sprühdüsen eine oder mehrere Teile der Trocknungseinrichtung, beispielsweise IR-Strahler und/oder Kalt- und/oder Heißluftdüsen oder dergleichen intergiert sein.

Indem Teile der Trocknungseinrichtung in beispielsweise eine oder mehrere Klebepistolen oder Sprühdüsen, mit denen die Klebestellen berührungslos mit Haftmittel versehen werden, integriert sind, kann jede Klebestelle unmittelbar bevor sie mit Haftmittel versehen wird genau an der Stelle getrocknet werden, an welcher das Haftmittel haften soll. Hierzu kann wie bereits erwähnt an oder bei einer Klebepistole oder Sprühdüse ein oder mehrere Auslässe, vorzugsweise Düsen für Kalt- und/oder Warm- und/oder Heißluft angeordnet sein.

Insbesondere kann der von der Trocknungseinrichtung ausgeführte Trocknungsvorgang einen Druckluftstoß vorsehen und/oder umfassen. Hierfür kann mindestens eine Trocknungsdüse an einen Druckluftspeicher angeschlossen sein, welcher Druckluft mit einem Wert von beispielsweise 0,2 bar bis 10 bar speichert. Insbesondere handelt es sich bei dem Druckluftspeicher um ein Druckluftnetz, welches in einer Produktionshalle auch für andere Anwendungen zur Verfügung stehen kann. Durch ein automatisch schaltbares Ventil kann Druckluft des Druckluftspeichers der Trocknungsdüse zugeführt werden.

Dabei ist denkbar, dass unmittelbar bevor eine Klebestelle mit Haftmittel versehen wird, die entsprechenden Teile der Trocknungseinrichtung auf die jeweilige Klebestelle einwirken. Dies hat den Vorteil, dass die Steuerung zur Positionierung eventuell mitbewegter beispielsweise Klebepistolen oder -düsen permanent aktiv bleiben kann, während zum Auftrag von Haftmittel nur auf einen Teil der Gesamtheit der Klebestellen lediglich die Haftmittelabgabe entsprechend gesteuert sein muss. Darüber hinaus wird nur eine Steuerung zur Ausrichtung sowie gegebenenfalls Mitbewegung entsprechender kombinierter beispielsweise Klebepistolen oder -düsen und -Strahler und/oder Kalt- und/oder Heißluftdüsen benötigt.

Die Mitbewegung und Ausrichtung kann beispielsweise derart erfolgen, dass die Artikel mit einer Kamera erfasst werden und auf Basis dieser Erfassung die Ausrichtung und die Mitbewegung erfolgt. Insbesondere könnten durch die Kamera freie Klebestellen oder zuvovor markierte Klebestellen erkannt werden, welchen gezielt getrocknet und/oder mit Haftmittel versehen werden sollen.

Die Vorrichtung kann Mittel in Form beispielsweise von Einspannungen umfassen, die eine Ausrichtung der Artikel von der Trocknungseinrichtung zur Einrichtung, mit welcher zumindest ein Teil der Gesamtheit der Klebestellen von zu einem Gebinde miteinander zu verbindenden Artikeln mit Haftmittel versehen werden, beibehalten, um die Artikel bzw. die Trocknungsdüsen bzw. die Haftmitteldüsen nicht separat ausrichten zu müssen.

Alternativ oder zusätzlich kann die Mitbewegung und die Ausrichtung, gegebenenfalls abhängig vom zu behandelnden Artikel, fest vorgegeben sein.

Bei einer gezielten Trocknung mittels Trocknungsdüsen sind vorzugsweise mindestens vier Trocknungsdüsen vorgesehen, mit denen ein Artikel an vier Stellen seiner Oberfläche punktuell getrocknet wird, wobei bevorzugt jeweils zwei Trocknungsdüsen paarweise auf unterschiedlichen Höhen angeordnet sind.

Denkbar ist auch, die Artikel auf einer, bevorzugt auf zwei oder mehr Höhen entlang ihres kompletten Umfangs zu trocknen, wobei dann auf diesen Höhen insbesondere bei Artikeln mit in Bezug auf deren Hoch- und/oder Mittelachse rotationssymmetrischer Form, die Artikel sehr felxibel mit Haftmittel versehen werden können, wobei die Klebestellen hierbei erst durch den Haftmittelauftrag und das spätere Zusammenführen definiert werden. Eine solche Vorgehendweise ist insbesondere dann von Vorteil, wenn Gebinde zusammengestellt werden, welche mehr als zwei Reihen und/oder zwei oder mehr Spalten aufweisen, weil es bei diesen Konstellationen dazu kommen kann, dass die Positionen der Klebestellen der einzelnen Artikel eines Gebindes variieren. Ob zwei in einem Gebinde benachbarte Artikel untereinander an zwei Klebestellen verbunden werden, oder nur an einer, kann im Wesentlichen von der Höhe der Artikel abhängen.

Bei einem Gebinde, welches in drei Reihen und drei Spalten angeordnete Artikel aufweist, gibt es in diesem Gebinde allein schon mindestens drei Artikel, die einen voneinander unterschiedlichen Haftmittelauftrag erhalten - vorausgesetzt jeder Artikel wird mit jedem benachbarten verbunden -die Artikel in den Gebindeecken sind mit zwei unter einem 90°-Winkel benachbarten Artikeln verbunden, die entlang der Seiten zwischen den Ecken angeordneten Artikeln mit jeweils drei T-förmig benachbarten Artikeln und der Artikel in der Mitte des Gebindes mit vier kreuzförmig benachbarten Artikeln verbunden.

Wenn Artikel entlang ihres kompletten Umfangs getrocknet werden, werden diese während des Trocknungsvorgangs vorzugsweise um deren Hoch- und/oder Mittelachse gedreht. Wenn die Artikel während der Trocknung transportiert werden, können die Trocknungsdüsen auch in Form von in Transportrichtung langgestreckten Schlitzen ausgebildet sein.

Vorzugsweise sind die Trocknungsdüsen höhenverstellbar.

Jeder Artikel des Gebindes weist wie bereits erwähnt eine als Aufstandsfläche des Artikels dienende, beispielsweise kreisrunde oder ovale oder regelmäßige oder unregelmäßige drei-, vier- oder mehreckige Grundfläche, eine beispielsweise der Grundfläche in mathematischem und/oder geometrischem Sinne identische oder ähnliche oder kongruente, um die normal zur Grundfläche erstreckende Höhe des Artikels von der Grundfläche beabstandete Deckfläche, sowie eine den Umfang der Grundfläche mit dem Umfang der Deckfläche verbindende Mantelfläche auf. Vom Schwerpunkt der Grundfläche zum Schwerpunkt der Deckfläche erstreckt sich eine Mittelachse, entlang welcher Mittelachse die Schwerpunkte aller aufeinander folgender, parallel zur Grundfläche liegender Querschnittsflächen des Artikels liegen.

Eine Mittelachse kann dabei beispielsweise definiert sein als stetige oder unstetige mathematische Kurve, auf der die Schwerpunkte aller aufeinander folgender Querschnittsflächen des Artikels liegen. Aus dieser möglichen Unstetigkeit heraus ergibt sich die Möglichkeit, dass der Artikel in aufeinander folgenden Abschnitten bzw. Bereichen verschiedene Mittelachsen aufweist, weshalb wenn im Folgenden von einer Mittelachse die Rede ist, es sich um mindestens eine Mittelachse handeln kann.

Dadurch ergibt sich für einen Artikel eine im Wesentlichen zylindrische Form, die jedoch über die Höhe des Artikels hinweg veränderliche Geometrien der aufeinander folgenden, parallel zur Grundfläche liegenden Querschnittsflächen aufweisen kann, entsprechend beispielsweise einem Kegel, einem Kegelstumpf oder einer Kombination von Zylinder und/oder Kegel und/oder Kegelstumpf. Auch können die Querschnittsflächen ähnlich wie bei einem schiefen Zylinder zumindest abschnittsweise über die Höhe des Artikels hinweg in Richtung parallel zur Grundfläche versetzt zueinander angeordnet sein. Grundsätzlich sind auch beliebige, beispielsweise organische Formen, sei es als Teil oder als Gesamtheit der äußeren Form eines Artikels denkbar.

Wichtig ist hervorzuheben, dass alternativ zur einleitend in Bezug auf den Stand der Technik beschriebenen Ausführung auch Gebinde denkbar sind, deren beispielsweise unregelmäßig geformte Artikel im Bereich von Partien deren Mantelflächen zusammenstoßen bzw. Klebestellen aufweisen, die bei einem ersten Artikel näher der Mittelachse liegen, als verbleibende Partien der Mantelfläche des ersten Artikels, und bei einem zweiten Artikel am weitesten von der Mittelachse entfernt liegen, oder die bei ein und dem selben Artikel eine erste Partie umfassen, welche näher der Mittelachse liegt, als in Bezug auf die erste Partie verbleibende Partien der Mantelfläche, und eine zweite Partie, die ferner der Mittelachse liegt, als in Bezug auf die zweite Partie verbleibende Partien der Mantelfläche des selben Artikels.

Grund- und Deckflächen der Artikel können parallel, aber auch schief zueinander angeordnet sein, wie dies beispielsweise von als Getränkebehälter in Form eines Getränkekartons ausgeführten Artikeln bekannt ist.

Bei einem als Behälter, wie etwa einem Getränkebehälter in Form einer Flasche ausgeführten Artikel, kann die gesamte Deckfläche durch eine beispielsweise vermittels eines Deckels verschließbare Öffnung eingenommen werden.

Ein oder mehrere Artikel können ober- und/oder unterhalb wenigstens einer Information tailliert ausgeführt sein.

Die Klebestellen können von der Einrichtung, mit welcher zumindest ein Teil der Gesamtheit der Klebestellen von zu einem Gebinde miteinander zu verbindenden Artikeln mit Haftmittel versehen werden, mit einem oder mehreren Klebepunkten und/oder Klebelinien versehen werden. An einem Klebepunkt ist ein Artikel punktuell mit dem Haftmittel versehen, beispielsweise indem das Haftmittel punktförmig auf eine entsprechende Partie der Mantelfläche eines oder mehrerer Artikel aufgebracht wird. An einer Klebelinie ist ein Artikel entlang einer sich vorzugsweise parallel zur Mittelachse des Artikels erstreckenden Linie mit dem Haftmittel versehen, beispielsweise indem das Haftmittel linienförmig auf eine entsprechende Partie der Mantelfläche eines oder mehrerer Artikel aufgebracht wird.

Die Vorrichtung kann alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Es ist ersichtlich, dass die Erfindung verwirklicht sein kann durch eine Abfüllanlage, wobei kurz vor oder in, insbesondere unmittelbar, der Einrichtung, mit welcher zumindest ein Teil der Gesamtheit der Klebestellen von zu einem Gebinde miteinander zu verbindenden, als zu befüllende und/oder befüllte Behälter ausgeführten Artikeln mit Haftmittel versehen werden, eine Trocknungseinrichtung für die Oberflächen der Artikel angeordnet ist.

Ein zweiter Gegenstand der Erfindung betrifft ein Verfahren zur Herstellung von Gebinden aus untereinander durch ein Haftmittel verbundenen Artikeln.

Die Artikel des fertigen Gebindes sind vermittels Haftmittels untereinander an kurz auch als Klebestellen bezeichneten Partien von Grund- und Deckflächen der Artikel an deren Umfang jeweils verbindenden Mantelflächen umfassenden oder von diesen umfassten Flächen verbunden. An den Klebestellen stoßen die Artikel im fertigen Gebinde zumindest annähernd, beispielsweise lediglich um das Haftmittel voneinander beabstandet aneinander.

Das Verfahren zeichnet sich aus durch eine Trocknung wenigstens der in Bezug auf deren Gesamtheit zumindest zum Teil mit Haftmittel zu versehenden Klebestellen insbesondere unmittelbar bevor zumindest ein Teil der Gesamtheit der Klebestellen von zu einem Gebinde miteinander zu verbindenden Artikeln mit Haftmittel versehen werden, aus.

Die Trocknung kann hinsichtlich deren Einwirkungsdauer auf die einzelnen Artikel und/oder hinsichtlich der Intensität deren Einwirkung auf die einzelnen Artikel abhängig von wenigstens an den in Bezug auf deren Gesamtheit zumindest zum Teil mit Haftmittel zu versehenden Klebestellen vorhandener Feuchtigkeit und/oder Nässe erfolgen.

Das Verfahren kann demnach vorsehen, zunächst festzustellen, ob Feuchtigkeit und/oder Nässe an einer Klebestelle vorhanden ist und eine Trocknung der entsprechenden Klebestelle nur vorzunehmen, wenn beispielsweise sensorisch erkannt wurde, dass Feuchtigkeit und/oder Nässe an der jeweiligen Klebestelle vorhanden ist.

Die Trocknung kann durch eine Relativbewegung der Artikel gegenüber umgebender Luft, beispielsweise durch eine rotatorische und/oder translatorische Bewegung der Artikel und/oder durch Erzeugung einer Strömung zumindest von an die beispielsweise feuchten und/oder nassen Klebestellen angrenzender Luft erfolgen.

Alternativ oder zusätzlich können die Artikel bei deren Bewegung so ausgerichtet werden, dass zumindest im Bereich von zu trocknenden Klebestellen ein maximaler Wärmeübergang zwischen umgebender Luft und Klebestelle und/oder darauf niedergeschlagener Feuchtigkeit und/oder Nässe stattfindet, beispielsweise durch eine Maximierung der Nusselt-Zahl durch eine Beeinflussung und Änderung der Ausrichtung der Artikel beispielsweise in Bezug auf die Richtung einer Relativbewegung zumindest von an die beispielsweise feuchten und/oder nassen Klebestellen angrenzender Luft.

Alternativ oder zusätzlich kann eine Einwirkung von Wärmestrahlung zumindest auf die beispielsweise feuchten und/oder nassen Klebestellen und/oder auf diese niedergeschlagene Feuchtigkeit und/oder Nässe vorgesehen sein.

Denkbar ist alternativ oder zusätzlich auch eine Erhöhung der Temperatur zumindest von an die beispielsweise feuchten und/oder nassen Klebestellen angrenzender Luft.

Vor der Trocknung kann das Verfahren vorsehen, die zu einem Gebinde miteinander vermittels eines Haftmittels zu verbindenden Artikel nach und nach oder zeitgleich von einem oder mehreren Artikelströmen aus jeweils unmittelbar hintereinander fortbewegten Artikeln abzutrennen und/oder zu vereinzeln.

Das Verfahren kann vorsehen, wenigstens einen Teil der Gesamtheit der Klebestellen der Artikel mit Haftmittel zu versehen.

Vorzugsweise werden zumindest die Hälfte der Klebestellen mit Haftmittel versehen, wobei jeweils nur eine von im fertigen Gebinde unmittelbar oder mittelbar lediglich durch Haftmittel getrennt aneinander stoßenden Klebestellen zweier oder mehrerer Artikel des Gebindes mit Haftmittel versehen werden.

Grundsätzlich können auch sämtliche Klebestellen mit Haftmittel versehen werden.

Das Verfahren kann vorsehen, dass die Klebestellen berührungsfrei, beispielsweise vermittels Sprühdüsen mit Haftmittel versehen werden. Wichtig ist an dieser Stelle hervorzuheben, dass sprühen im Sinne der Erfindung neben einer Abgabe einer Vielzahl von Tröpfchen Haftmittels auch die Abgabe von einem einzigen Volumen an Haftmittel einschließt, welches in einem Schritt auf einer Klebestelle aufgetragen werden soll.

Nachdem schließlich zumindest ein Teil der Klebestellen wenigstens zweier zu einem Gebinde zu verbindender Artikel mit Haftmittel versehen wurden, kann das Verfahren anschließend vorsehen, die wenigstens zwei an wenigstens einem Teil ihrer Klebestellen mit Haftmittel versehenen Artikel entsprechend ihrer späteren Anordnung im fertigen Gebinde zusammenzuführen und an den einander zugewandten und zumindest zum Teil mit Haftmittel versehenen Klebestellen aneinander zu pressen, zumindest beispielsweise so lange, bis ein eine Aushärtezeit benötigendes Haftmittel eine Klebeverbindung zwischen den Artikeln hergestellt hat, die einer Belastung im weiteren Umgang mit dem Gebinde oder dem bis dato fertig gestellten Teil des Gebindes stand hält.

Weitere, ebenfalls zu dem Gebinde mit zu verbindende Artikel können nach und nach, sowie sie an den entsprechenden Klebestellen mit Haftmittel versehen sind, dem zunächst durch die ersten beiden Artikel bis dato fertig gestellten Teil des Gebindes zugeführt werden und an den einander zugewandten und zumindest zum Teil mit Haftmittel versehenen Klebestellen an den bis dato fertig gestellten Teil des Gebindes gepresst werden, so dass der bis dato fertig gestellte Teil des Gebindes immer weiter anwächst, bis das Gebinde seine endgültige Anzahl von Artikeln in der entsprechenden Anordnung erreicht hat.

Alternativ zu einer zuvor beschriebenen Vorgehensweise, bei der das fertig zu stellende Gebinde Artikel um Artikel anwächst, können zunächst alle Artikel zumindest an einem Teil der Gesamtheit ihrer Klebestellen mit Haftmittel versehen werden und anschließend alle zu einem Gebinde miteinander zu verbindenden Artikel zeitgleich oder zumindest annähernd zeitgleich zusammengeführt und zumindest beispielsweise so lange gegeneinander gepresst werden, bis ein eine Aushärtezeit benötigendes Haftmittel eine Klebeverbindung zwischen den Artikeln hergestellt hat, die einer Belastung im weiteren Umgang mit dem Gebinde oder dem bis dato fertig gestellten Teil des Gebindes stand hält.

Das Verfahren kann vorsehen, das Gebinde im Anschluss hieran mit einer Umfassung, beispielsweise einer Umreifung und/oder mit einem Tragegriff zu versehen.

Das Verfahren kann vorsehen, mindestens einen gegebenenfalls vorgesehenen Tragegriff an der Umfassung und/oder an einem oder mehreren Artikeln des Gebindes anzuordnen.

Wenn der Tragegriff unmittelbar an einem oder mehreren Artikeln angeordnet, beispielsweise aufgebracht, insbesondere angeklebt, wird, kann im Vorhinein eine gezielte Trocknung der Stellen der Artikel erfolgen, an denen der Tragegriff platziert wird. Die Trocknung kann in derselben Einrichtung durchgeführt werden, wie die Trocknung für die mit Haftmittel zu versehenden Klebestellen oder in einer dieser nachgelagerten, separaten Vorrichtung.

Um Energie zu sparen ist es in beiden Fällen möglich, lediglich nur einen Teil der Artikel eines Gebindes hierfür an den entsprechenden Stellen zu trocknen.

Wird der Tragegriff nur an zwei Artikeln des Gebindes angebracht, werden bevorzugt nur die zwei Artikel an den entsprechenden Stellen zur Tragegriffaufbringung getrocknet. Der Wärmeeintrag bzw. die speziell auf diese Stellen aufgebrachte Energie ist größer als an Stellen der zwei Artikel, an denen der Tragegriff nicht platziert wird und/oder größer als an den anderen Artikeln des Gebindes, an denen zur Tragegriffaufbringung keine gezielte Trocknung erfolgt.

Eine gezielte Trocknung kann zusätzlich an den Klebestellen vorgesehen werden.

Die Fläche auf den Artikeln, die für eine gezielte Trocknung für die Klebestellen oder die Tragegriffaufbringung vorgesehen ist, ist bevorzugt größer als der Bereich, der schließlich von dem Haftmittel oder von dem Tragegriff eingenommen wird.

Wichtig ist hervorzuheben, dass das Verfahren vorsehen kann, die Artikel wie zuvor in Bezug auf die Vorrichtung beschrieben mit Informationen zu versehen.

Die Artikel können bevor sie mit Informationen versehen werden, oder im Anschluss hieran, jedoch bevor deren Klebestellen zumindest zum Teil mit Haftmittel versehen werden, mit einem Inhalt befüllt werden.

Der Inhalt der Artikel kann bei deren Befüllung eine Temperatur aufweisen, welche unterhalb der Temperatur in der Umgebung einer das Verfahren ausführenden Vorrichtung liegt, beispielsweise zwischen 4°C und 20°C bei einer Umgebungstemperatur in einer Produktionshalle von 25°C. Die Artikel können nach deren Befüllung mit Inhaltsstoff über eine gewisse Strecke in dieser Umgebung transportiert werden, also ohne eine die Transportstrecke umgebende Maschineneinhausung unter in einer solchen Maschineneinhausung kontrollierter Atmosphäre.

Das Verfahren kann vorsehen, die Artikel des Gebindes beispielsweise in einer Reihe geradlinig hintereinander, oder die Artikel des Gebindes in rechtwinklig zueinander verlaufenden Reihen und Zeilen regelmäßig anzuordnen.

Um Artikel mit abschnittsweise zylindrischen oder annähernd zylindrischen Formen wie bspw. Getränkedosen oder Getränkeflaschen, möglichst platzsparend und mit möglichst geringer Relativbeweglichkeit zueinander zusammenzufassen, können die Artikel im fertigen Gebinde einen sogenannten Waben- oder Kugelverbund bilden, der auch als genestete Anordnung bezeichnet wird. Hierbei stehen die in benachbarten Reihen im Gebinde angeordneten Artikel jeweils derart versetzt zueinander, dass die zwischen den Artikeln gebildeten Lücken möglichst gering ausfallen. Die Zeilen verlaufen dabei nicht im rechten Winkel zu den Reihen, sondern diagonal. Die Zeilen können dabei gerade verlaufen oder V-förmig abgewinkelt, oder Zickzackförmig abgewinkelt schräg zu den Reihen verlaufen. Eine solche Waben- oder Kugelanordnung stellt einen Verbund einer gegebenen Anzahl von Artikeln mit der geringstmöglichen Grundfläche dar.

Zusammengefasst können die Artikel im Gebinde in einer Reihe, beispielsweise linear oder rechtwinklig oder genestet angeordnet sein. Auch eine gemischte Anordnung ist denkbar, abhängig von der Ausgestaltung des Gebindes.

Das Verfahren kann alternativ oder zusätzlich einzelne oder eine Kombination mehrerer einleitend in Verbindung mit dem Stand der Technik und/oder in einem oder mehreren der zum Stand der Technik erwähnten Dokumente und/oder zuvor in Verbindung mit der Vorrichtung beschriebene Merkmale aufweisen.

Ohne Anspruch auf Vollständigkeit deren Nennung zu erheben sind entsprechende Merkmale beispielsweise:
- die Trocknung nicht nur der Klebestellen, sondern gegebenenfalls der gesamten Mantelflächen und/oder durch deren Mantelflächen sowie deren Grund- und/oder Deckflächen gebildete Oberflächen der Artikel, und/oder
- die Reinigung wenigstens der in Bezug auf deren Gesamtheit zumindest zum Teil mit Haftmittel zu versehenden Klebestellen der Artikel vor deren Trocknung, und/oder
- die Herstellung von Artikeln, beispielsweise die Herstellung von mit einem Inhaltsstoff zu befüllenden, als Behälter ausgeführten Artikeln durch Streckblasen, und/oder
- die Kühlung zumindest der Grundflächen der Artikel beispielsweise durch ein Bespritzen und/oder berieseln wenigstens der Grundflächen mit Wasser während und/oder unmittelbar nach der Herstellung der Artikel, und/oder
- die Innenreinigung bis hin zur Innensterilisation von zuvor hergestellten, und im Anschluss an die Innenreinigung und/oder Innensterilisation mit einem Inhaltsstoff zu befüllenden, als Behälter ausgeführten Artikeln, und/oder
- die Befüllung zuvor hergestellter Artikel vor der Trocknung der in Bezug auf deren Gesamtheit zumindest zum Teil mit Haftmittel zu versehenden Klebestellen der Artikel, und/oder
- dem Verschließen zuvor hergestellter und befüllter Artikel vor der Trocknung der in Bezug auf deren Gesamtheit zumindest zum Teil mit Haftmittel zu versehenden Klebestellen der Artikel, und/oder
- dem Gruppieren der zuvor hergestellten Gebinde zu Stapellagen und dem Aufstapeln zu einem aus mehreren Stapellagen bestehenden Stapel an einem Stapelplatz.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Es zeigen in schematischer Darstellung:

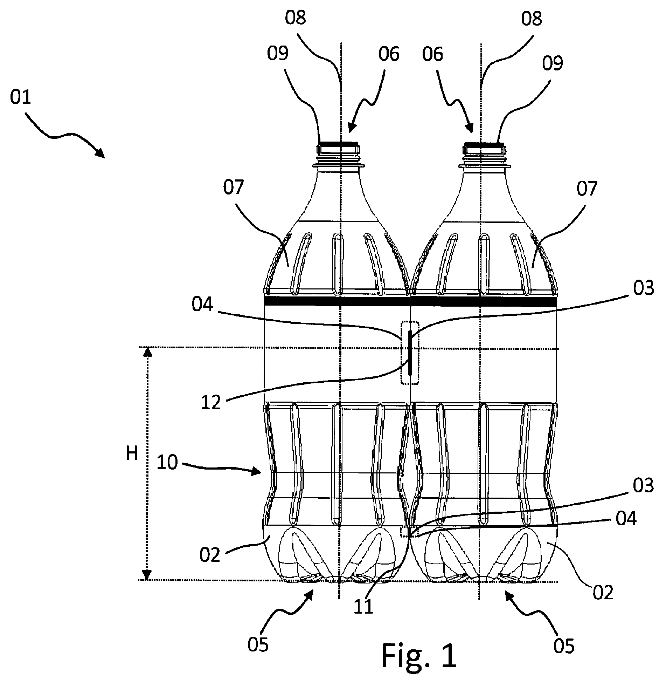

- Fig. 1: zwei Artikel eines Gebindes, welche untereinander durch ein Haftmittel an Klebestellen miteinander verbunden sind, in einer Seitenansicht.

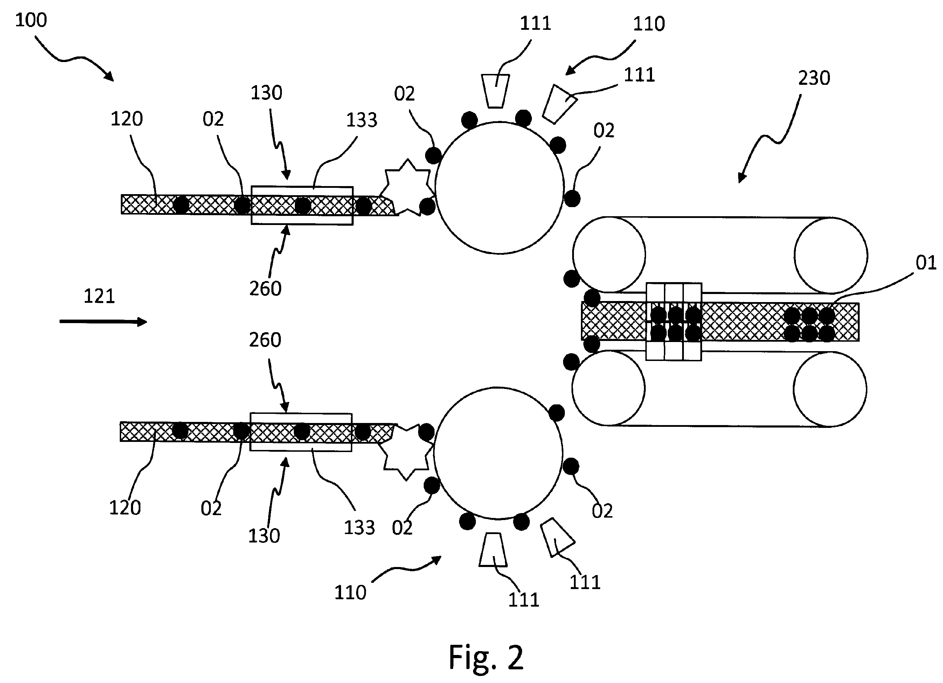

- Fig. 2: ein erstes Ausführungsbeispiel einer Vorrichtung zur Herstellung von Gebinden aus untereinander an Klebestellen durch ein Haftmittel verbundenen Artikeln, an welchen Klebestellen die Artikel im fertigen Gebinde unmittelbar und/oder lediglich um das Haftmittel voneinander beabstandet aneinander stoßen in einer Draufsicht.

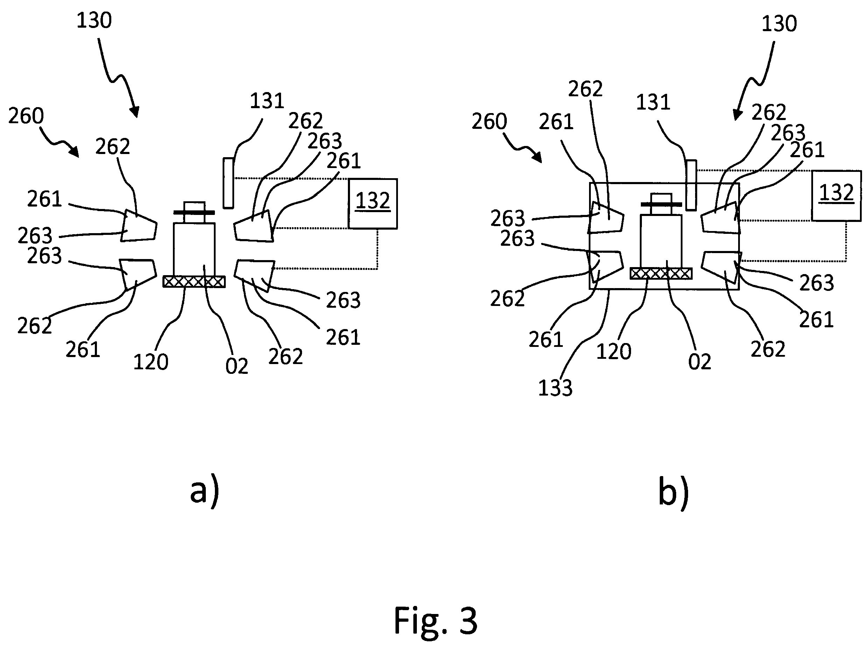

- Fig. 3: zwei Ausführungsbeispiele von Trocknungsvorrichtungen einer Vorrichtung zur Herstellung von Gebinden aus untereinander an Klebestellen durch ein Haftmittel verbundenen Artikeln, an welchen Klebestellen die Artikel im fertigen Gebinde unmittelbar und/oder lediglich um das Haftmittel voneinander beabstandet aneinander stoßen in einem Querschnitt quer zu einem Transportweg der Artikel gesehen, wobei die Trocknungsvorrichtung in Fig. 3 a) ohne und die Trocknungsvorrichtung in Fig. 3 b) mit einem Tunnel ausgeführt ist.

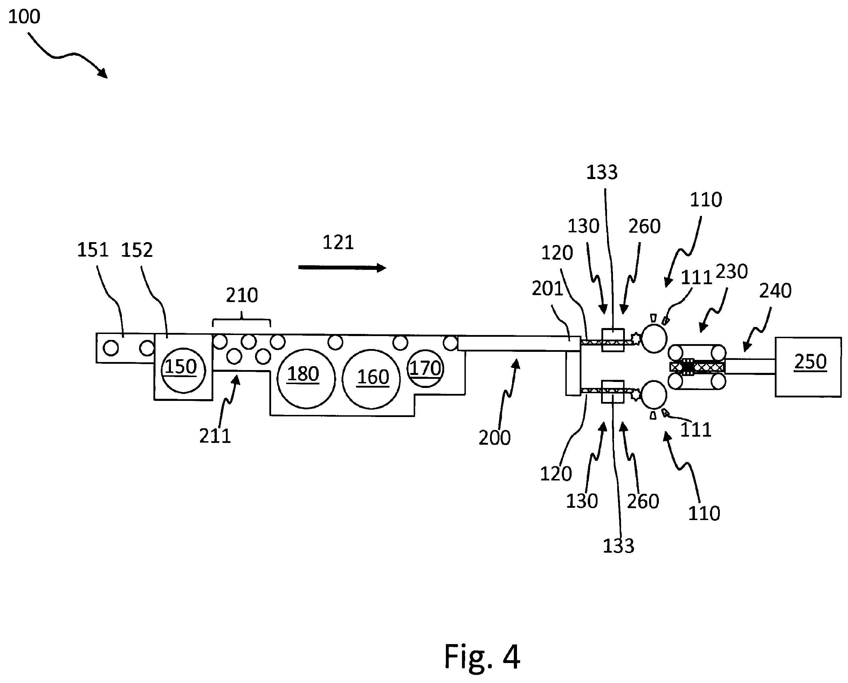

- Fig. 4: ein zweites Ausführungsbeispiel einer Vorrichtung zur Herstellung von Gebinden aus untereinander an Klebestellen durch ein Haftmittel verbundenen Artikeln, an welchen Klebestellen die Artikel im fertigen Gebinde unmittelbar und/oder lediglich um das Haftmittel voneinander beabstandet aneinander stoßen in einer Draufsicht.

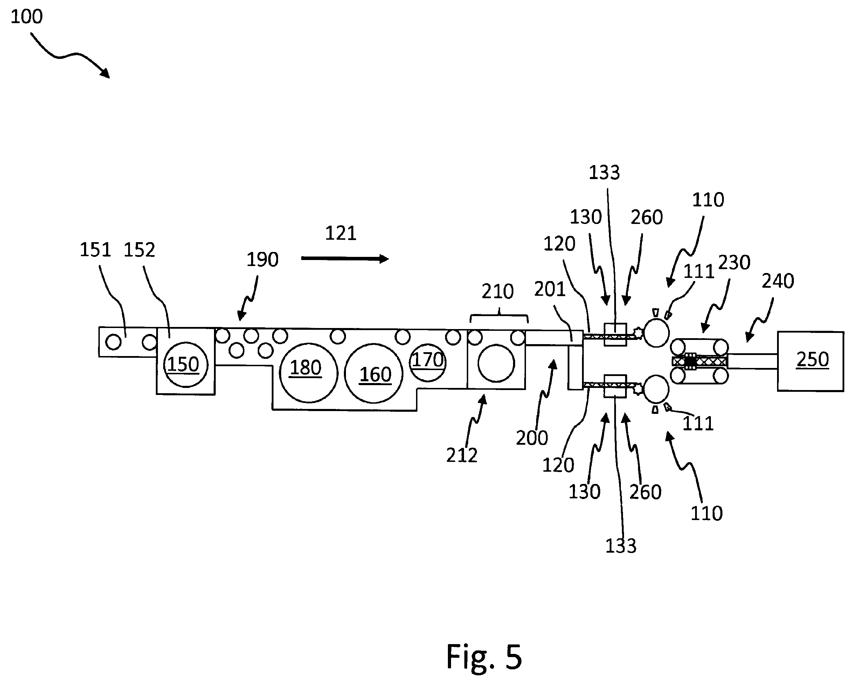

- Fig. 5: ein drittes Ausführungsbeispiel einer Vorrichtung zur Herstellung von Gebinden aus untereinander an Klebestellen durch ein Haftmittel verbundenen Artikeln, an welchen Klebestellen die Artikel im fertigen Gebinde unmittelbar und/oder lediglich um das Haftmittel voneinander beabstandet aneinander stoßen in einer Draufsicht.

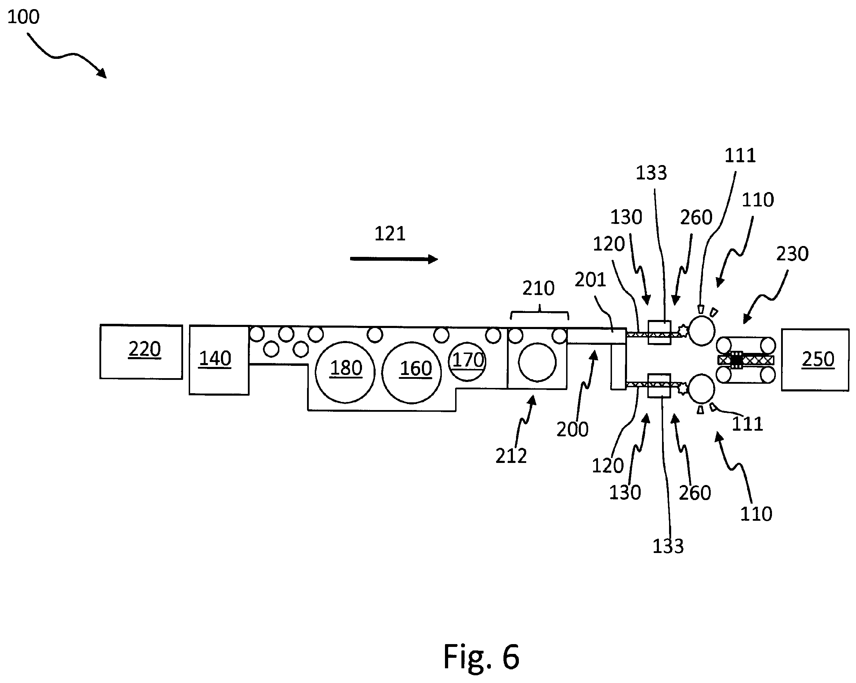

- Fig. 6: ein viertes Ausführungsbeispiel einer Vorrichtung zur Herstellung von Gebinden aus untereinander an Klebestellen durch ein Haftmittel verbundenen Artikeln, an welchen Klebestellen die Artikel im fertigen Gebinde unmittelbar und/oder lediglich um das Haftmittel voneinander beabstandet aneinander stoßen in einer Draufsicht.

Fig. 1 zeigt eine Seitenansicht eines Gebindes 01, dessen Artikel 02 untereinander durch ein Haftmittel 03 an Klebestellen 04 miteinander verbunden sind.

Ein Artikel 02 eines Gebindes 01 weist eine als Aufstandsfläche des Artikels 02 dienende, beispielsweise kreisrunde oder ovale oder regelmäßige oder unregelmäßige drei-, vier- oder mehreckige Grundfläche 05, eine beispielsweise der Grundfläche 05 in mathematischem und/oder geometrischem Sinne identische oder ähnliche oder kongruente, um die normal zur Grundfläche 05 erstreckende Höhe H des Artikels 02 von der Grundfläche 05 beabstandete Deckfläche 06, sowie eine den Umfang der Grundfläche 05 mit dem Umfang der Deckfläche 06 verbindende Mantelfläche 07 auf. Vom geometrischen Schwerpunkt der Grundfläche 05 zum geometrischen Schwerpunkt der Deckfläche 06 erstreckt sich eine Mittelachse 08, entlang welcher Mittelachse 08 die Schwerpunkte aller aufeinander folgender, parallel zur Grundfläche 05 liegender Querschnittsflächen des Artikels 02 liegen.

Die Artikel 02 des fertigen Gebindes 01 sind untereinander durch ein Haftmittel 03, beispielsweise mittels eines oder mehrerer Kleber an kurz auch als Klebestellen 04 bezeichneten Partien von Grundflächen 05 und Deckflächen 06 der Artikel 02 an deren Umfang jeweils verbindenden Mantelflächen 07 umfassenden oder von diesen umfassten Flächen verbunden.

An den Klebestellen 04, an denen die Artikel 02 durch das Haftmittel 03 miteinander zum Gebinde 01 verbunden werden bzw. im fertigen Gebinde 01 verbunden sind, stoßen die Artikel 02 im fertigen Gebinde 01 zumindest annähernd, beispielsweise lediglich um das Haftmittel 03 voneinander beabstandet aneinander.

Im Falle eines Artikels 02 in Form eines geraden Zylinders ist die Mittelachse 08 mit einer normal auf der Grundfläche 05 aufstehenden Hochachse des Artikels 02 identisch.

Bei einem als Behälter, wie etwa einem Getränkebehälter in Form einer Flasche ausgeführten Artikel 02, kann die gesamte Deckfläche 06 durch eine beispielsweise vermittels eines Deckels 09 verschließbare Öffnung eingenommen werden.

Bei den Klebestellen 04 handelt es sich um Partien von Grund- 05 und Deckflächen 06 der Artikel 02 an deren Umfang jeweils verbindenden Mantelflächen 07 umfassenden oder von diesen umfassten Flächen, an denen die Artikel 02 im Gebinde 01 durch Haftmittel 03 miteinander verbunden sind.

An den Klebestellen 04 stoßen die Artikel 02 im Gebinde 01 zumindest annähernd, beispielsweise lediglich um das Haftmittel 03 voneinander beabstandet aneinander.

Das Haftmittel 03 kann einen Kleber umfassen, welcher bei auf der selben Höhe H angeordneten Klebestellen 04 von Klebestelle 04 zu Klebestelle 04 zweier im fertigen Gebinde 01 benachbarter Artikel 02 reicht.

Wenigstens ein Artikel 02 des Gebindes 01 kann vermittels einer abschnittsweisen Verjüngung 10 tailliert ausgeführt sein.

Die Klebestellen 04 können einen oder mehrere Klebepunkte 11 und/oder Klebelinien 12 umfassen. An einem Klebepunkt 11 ist ein Artikel 02 punktuell mit Haftmittel 03 versehen, beispielsweise indem mindestens ein Haftmittel 03 punktförmig auf eine entsprechende Klebestelle 04 eines oder mehrerer Artikel 02 aufgebracht wird. An einer Klebelinie 12 ist ein Artikel 02 entlang einer sich vorzugsweise parallel zur Mittelachse 08 des Artikels 02 erstreckenden Linie mit mindestens einem Haftmittel 03 versehen, beispielsweise indem mindestens ein Haftmittel 03 linienförmig auf eine entsprechende Klebestelle 04 eines oder mehrerer Artikel 02 aufgebracht wird.

Ein Verfahren zur Herstellung zuvor beschriebener, in Fig. 1 dargestellter Gebinde 01 aus untereinander an Klebestellen 04 durch ein Haftmittel 03 verbundenen Artikeln 02, an welchen Klebestellen 04 die Artikel 02 im fertigen Gebinde 01 unmittelbar und/oder lediglich um das Haftmittel 03 voneinander beabstandet aneinander stoßen sieht eine Trocknung wenigstens der in Bezug auf deren Gesamtheit zumindest zum Teil mit Haftmittel 03 zu versehenden Klebestellen 04 unmittelbar bevor zumindest ein Teil der Gesamtheit der Klebestellen 04 von zu einem Gebinde 01 miteinander zu verbindenden Artikeln 02 mit Haftmittel 03 versehen werden vor.

Nachdem wenigstens zwei Artikel 02 zumindest auf einem Teil der Gesamtheit ihrer Klebestellen 04 mit Haftmittel 03 versehen worden sind, sieht das Verfahren bevorzugt vor, dass die wenigstens zwei Artikel 02 entsprechend ihrer späteren Anordnung im fertigen Gebinde 01 zusammengeführt und an den einander zugewandten und zumindest zum Teil mit Haftmittel 03 versehenen Klebestellen 04 aneinander gepresst werden.

Das Verfahren kann hierbei vorsehen, dass weitere, ebenfalls zu dem Gebinde 01 mit zu verbindende Artikel 02 nach und nach, sowie sie an den entsprechenden Klebestellen 04 mit Haftmittel 03 versehen sind, dem zunächst durch die ersten beiden Artikel 02 bis dato fertig gestellten Teil des Gebindes 01 zugeführt werden und an den einander zugewandten und zumindest zum Teil mit Haftmittel 03 versehenen Klebestellen 04 an den bis dato fertig gestellten Teil des Gebindes 01 gepresst werden, so dass der bis dato fertig gestellte Teil des Gebindes 01 immer weiter anwächst, bis das Gebinde 01 seine endgültige Anzahl von Artikeln 02 in der entsprechenden Anordnung erreicht hat.

Grundsätzlich ist auch denkbar, zunächst weitere Teile eines Gebindes durch Aneinanderpressen von zwei oder mehr Artikeln 02 an deren zumindest zum Teil mit Haftmittel 03 versehenen Klebestellen 04 zu erzeugen und das Gebinde 01 durch Zusammenführen und Aneinanderpressen einer entsprechende Anzahl zuvor fertig gestellter Teile des Gebindes 01 an zumindest zum Teil mit Haftmittel 03 versehenen Klebestellen der zum Gebinde 01 zu verbindenden Teile fertig zu stellen.

Alternativ kann das Verfahren vorsehen, dass zunächst alle Artikel 02 zumindest an einem Teil der Gesamtheit ihrer Klebestellen 04 mit Haftmittel 03 versehen werden und anschließend alle zu einem Gebinde 01 miteinander zu verbindenden Artikel 02 zeitgleich oder zumindest annähernd zeitgleich zusammengeführt und gegeneinander gepresst werden.

Das Aneinanderpressen erfolgt zumindest beispielsweise so lange, bis ein eine Aushärtezeit benötigendes Haftmittel 03 eine Klebeverbindung zwischen den Artikeln 02 hergestellt hat, die einer Belastung im weiteren Umgang mit dem Gebinde 01 oder dem bis dato fertig gestellten Teil des Gebindes 01 stand hält.

Das Verfahren sieht vorzugsweise vor, dass die Trocknung hinsichtlich deren Einwirkungsdauer auf die einzelnen Artikel 02 bzw. zumindest deren Klebestellen 04 und/oder hinsichtlich der Intensität deren Einwirkung auf die einzelnen Artikel 02 bzw. zumindest deren Klebestellen 04 abhängig von wenigstens an den in Bezug auf deren Gesamtheit zumindest zum Teil mit Haftmittel 03 zu versehenden Klebestellen 04 vorhandener Feuchtigkeit und/oder Nässe erfolgt. Das Verfahren kann demnach vorsehen, zunächst festzustellen, ob Feuchtigkeit und/oder Nässe an einer Klebestelle 04 vorhanden ist und eine Trocknung der entsprechenden Klebestelle 04 nur vorzunehmen, wenn beispielsweise sensorisch erkannt wurde, dass Feuchtigkeit und/oder Nässe an der jeweiligen Klebestelle 04 vorhanden ist

Das Verfahren kann vorsehen, dass:
- die Trocknung durch eine Relativbewegung der Artikel 02 gegenüber umgebender Luft, beispielsweise durch eine rotatorische und/oder translatorische Bewegung der Artikel 02 und/oder durch Erzeugung einer Strömung zumindest von an die beispielsweise feuchten und/oder nassen Klebestellen 04 angrenzender Luft erfolgt und/oder
- die Artikel 02 bei deren Bewegung so ausgerichtet werden, dass zumindest im Bereich von zu trocknenden Klebestellen 04 ein maximaler Wärmeübergang zwischen umgebender Luft und Klebestelle 04 und/oder darauf niedergeschlagener Feuchtigkeit und/oder Nässe stattfindet, beispielsweise durch eine Maximierung der Nusselt-Zahl durch eine Beeinflussung und Änderung der Ausrichtung der Artikel 02 beispielsweise in Bezug auf die Richtung einer Relativbewegung zumindest von an die beispielsweise feuchten und/oder nassen Klebestellen 04 angrenzender Luft, und/oder
- die Trocknung eine Einwirkung von Wärmestrahlung zumindest auf die beispielsweise feuchten und/oder nassen Klebestellen 04 und/oder auf die Klebestellen 04 niedergeschlagene Feuchtigkeit und/oder Nässe vorsieht, und/oder
- die Trocknung eine Erhöhung der Temperatur zumindest von an die beispielsweise feuchten und/oder nassen Klebestellen 04 angrenzender Luft vorsieht, und/oder
- vor der Trocknung die zu einem Gebinde 01 miteinander vermittels eines Haftmittels 03 zu verbindenden Artikel 02 nach und nach oder zeitgleich von einem oder mehreren Artikelströmen aus jeweils unmittelbar hintereinander fortbewegten Artikeln 02 abgetrennt und/oder vereinzelt werden, und/oder
- zumindest die Hälfte der Gesamtheit der Klebestellen 04 mit Haftmittel 03 versehen werden, wobei vorzugsweise jeweils nur eine von im fertigen Gebinde 01 unmittelbar oder mittelbar lediglich durch Haftmittel 03 getrennt aneinander stoßenden Klebestellen 04 zweier oder mehrerer Artikel 02 des Gebindes 01 mit Haftmittel 03 versehen werden, und/oder
- die Klebestellen 04 berührungsfrei, beispielsweise vermittels Sprühdüsen 111 mit Haftmittel 03 versehen werden, und/oder
- das Gebinde 01 nach der Verbindung dessen Artikel 02 untereinander mittels Haftmittels 03 mit einer Umfassung, beispielsweise einer Umreifung versehen wird, und/oder.
- das Gebinde 01 mit einem beispielsweise an der Umfassung und/oder an einem oder mehreren Artikeln 02 des Gebindes 01 angeordneten Tragegriff versehen wird, und/oder
- wenigstens ein Teil der Artikel 02 mit Informationen versehen wird, und/oder
- die Artikel 02 bevor deren Klebestellen 04 zumindest zum Teil mit Haftmittel 03 versehen werden, mit einem Inhalt befüllt werden, und/oder
- die Artikel 02 des Gebindes 01 beispielsweise in einer Reihe geradlinig hintereinander, oder die Artikel 02 des Gebindes 01 in rechtwinklig zueinander verlaufenden Reihen und Zeilen oder genestet angeordnet werden, und/oder
- eine Trocknung nicht nur der Klebestellen 04, sondern gegebenenfalls der gesamten Mantelflächen 07 der Artikel 02 und/oder der gesamten durch die Mantelflächen 07 sowie die Grundflächen 05 und/oder Deckflächen 06 gebildeten Oberflächen der Artikel 02 vorgesehen ist, und/oder
- eine Reinigung wenigstens der in Bezug auf deren Gesamtheit zumindest zum Teil mit Haftmittel 03 zu versehenden Klebestellen 04 der Artikel 02 vor deren Trocknung vorgesehen ist, und/oder
- eine Herstellung der Artikel 02 vorgesehen ist, beispielsweise die Herstellung von mit einem Inhaltsstoff zu befüllenden, als Behälter ausgeführten Artikeln 02 durch Streckblasen, und/oder
- eine Kühlung zumindest der Grundflächen 05 der Artikel 02 beispielsweise durch ein Bespritzen und/oder berieseln wenigstens der Grundflächen 05 mit Wasser während und/oder unmittelbar nach der Herstellung der Artikel 02 vorgesehen ist, und/oder
- eine Innenreinigung bis hin zur Innensterilisation zuvor hergestellter, und im Anschluss an die Innenreinigung und/oder Innensterilisation mit einem Inhaltsstoff zu befüllender, als Behälter ausgeführter Artikel 02 vorgesehen ist, und/oder
- eine Befüllung zuvor hergestellter Artikel 02 vor der Trocknung der in Bezug auf deren Gesamtheit zumindest zum Teil mit Haftmittel 03 zu versehenden Klebestellen 04 der Artikel 02 vorgesehen ist, und/oder
- ein Verschließen zuvor hergestellter und befüllter Artikel 02 beispielsweise vermittels jeweils eines oder mehrerer Deckel 09 je Artikel 02 vor der Trocknung der in Bezug auf deren Gesamtheit zumindest zum Teil mit Haftmittel 03 zu versehenden Klebestellen 04 der Artikel 02 vorgesehen ist, und/oder
- ein Gruppieren der zuvor hergestellten Gebinde 01 zu Stapellagen vorgesehen ist, und/oder
- ein Aufstapeln zu einem aus mehreren Stapellagen bestehenden Stapel an einem Stapelplatz vorgesehen ist.

Wichtig ist hervorzuheben, dass das Verfahren vorsehen kann, die Artikel 02 beispiesweise direkt nach der Herstellung deren Grundflächen 05, Deckflächen 06 und Mantelflächen 07 umfassenden Oberflächen beispielsweise im Direktdruck oder durch das Versehen mit Informationsträgern mit Informationen zu versehen.

Die Artikel 02 können vor dem Trocknen mit einem Inhalt, beispielsweise einem Inhaltsstoff, befüllt werden.

Die Artikel 02 können vor deren Befüllung und nach deren Herstellung in einem Direktdruck mit Informationen oder einfach mit einer Farbe versehen werden.

Ebenso wichtig ist hervorzuheben, dass das Verfahren vorsehen kann, dass die Artikel 02, bevor deren Oberflächen mit Informationen versehen werden, gereinigt und/oder getrocknet werden.

Eine zur Durchführung eines zuvor beschriebenen Verfahrens zur Herstellung zuvor beschriebener, in Fig. 1 dargestellter Gebinde 01 geeignete, in Fig. 2, Fig. 3, Fig. 4, Fig. 5, Fig. 6 ganz oder in Teilen dargestellten Vorrichtung 100 zur Herstellung von Gebinden 01 aus untereinander an Klebestellen 04 durch ein Haftmittel 03 verbundenen Artikeln 02, an welchen Klebestellen 04 die Artikel 02 im fertigen Gebinde 01 unmittelbar und/oder lediglich um das Haftmittel 03 voneinander beabstandet aneinander stoßen, umfasst wenigstens eine Einrichtung 110, mit welcher zumindest ein Teil der Gesamtheit der Klebestellen 04 von zu einem Gebinde 01 miteinander zu verbindenden Artikeln 02 mit Haftmittel 03 versehen werden.

Wenigstens umfasst die Vorrichtung 100 darüber hinaus eine in Bezug auf einen in Fig. 2, Fig. 4, Fig. 5 und Fig. 6 zusätzlich durch einen Pfeil 121 angedeuteten Transportweg 120 der Artikel 02 zu der Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, in die Einrichtung 110 integrierte und/oder unmittelbar vor der Einrichtung 110 angeordnete Trocknungseinrichtung 130 wenigstens für die in Bezug auf deren Gesamtheit zumindest zum Teil mit Haftmittel 03 zu versehenden Klebestellen 04 der vermittels Haftmittel 03 miteinander zu einem Gebinde 01 zu verbindenden Artikel 02.

Die Trocknungseinrichtung 130 kann nicht nur die Klebestellen 04 umfassende Partien trocknen, sondern alternativ die gesamten Mantelflächen 07 der vermittels Haftmittel 03 zu einem Gebinde 01 miteinander zu verbindenden Artikel 02 und/oder durch deren Mantelflächen 07 sowie deren Grundflächen 05 und/oder Deckflächen 06 gebildete Oberflächen der Artikel 02. In einer weiteren Alternative können lediglich Bereiche der Artikel 02 in der Trocknungseinrichtung 130 getrocknet werden, welche bestimmten Höhenbereichen der Artikel entsprechen, innerhalb derer die Klebestellen in bestimmten Abständen zueinander aufgebracht werden.

Grundsätzlich ist denkbar, dass die Gebinde 01 wie zuvor in Verbindung mit dem Verfahren beschrieben sukzessive anwachsen, wobei zunächst Teile des fertigen Gebindes 01 durch Verbindung mehrerer Artikel 02 mittels Haftmittel 03 hergestellt werden, welche Teile anschließend mittels Haftmittel 03 zum fertigen Gebinde 01 miteinander verbunden werden. Die Trocknungseinrichtung 130 kann auch für Klebestellen 04 solcher bereits aus mehreren untereinander durch Haftmittel 03 verbundene Artikel 02 gebildeter Teile eines Gebindes 01 vorgesehen sein.

Die Vorrichtung 100 kann mindestens einen im Bereich der Trocknungseinrichtung 130 angeordneten Sensor 131 zur Erfassung von Feuchtigkeit und/oder Nässe wenigstens an den in Bezug auf deren Gesamtheit zumindest zum Teil mit Haftmittel 03 zu versehenden Klebestellen 04 aufweisen. Der Sensor 131 weist zumindest dem Vorhandensein und/oder dem Nichtvorhandensein von Feuchtigkeit und/oder Nässe wenigstens im Bereich der Klebestellen 04 der zu einem Gebinde 01 mittels Haftmittel 03 untereinander zu verbindende Artikel 02 proportionale Ausgangssignale auf. Der Sensor 131 kann Teil der Trocknungseinrichtung 130 sein. Darüber hinaus kann eine mit der Trocknungseinrichtung 130 verbundene Steuerungseinrichtung 132 vorgesehen sein, welche die Ausgangssignale des mindestens einen Sensors 131 empfängt und abhängig von den Ausgangssignalen die Einwirkungsdauer und/oder die Intensität der Einwirkung wenigstens von Teilen der Trocknungseinrichtung 130 auf die einzelnen Artikel 02 steuert, insbesondere hinsichtlich eines möglichst niedrigen Energierverbrauchs und/oder einer Mindestrate an Trocknungsergebnis.

Vermittels des Sensors 131 kann festgestellt werden, ob die Klebestellen 04 und/oder die Oberflächen der untereinander durch ein Haftmittel 03 zu einem Gebinde 01 zu verbindenden Artikel 02 feucht und/oder nass sind. Vermittels der beispielsweise mit dem Sensor 131 verbundenen Steuerungseinrichtung 132 kann die Trocknungseinrichtung 130 beispielsweise zwecks Energieeinsparung nur dann betrieben werden, wenn festgestellt wurde, dass die Klebestellen 04 und/oder die Oberflächen der untereinander durch ein Haftmittel 03 zu einem Gebinde 01 zu verbindenden Artikel 02 feucht und/oder nass sind.

Die Vorrichtung kann alternativ oder zusätzlich eines oder mehrere der folgenden, unter I. und/oder unter II. aufgelisteten Merkmale aufweisen:
I. In Bezug auf den in Fig. 2, Fig. 4, Fig. 5 und Fig. 6 zusätzlich durch einen Pfeil 121 angedeuteten Transportweg 120 der Artikel 02 von der Trocknungseinrichtung 130 zur Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, kann der Trocknungseinrichtung 130:
   - eine Einrichtung 140 zur Reinigung wenigstens der in Bezug auf deren Gesamtheit zumindest zum Teil mit Haftmittel 03 zu versehenden Klebestellen 04 der Artikel 02 vorgelagert sein (Fig. 6), und/oder
   - eine Einrichtung 150 zur Herstellung von Artikeln 02, vorzugsweise eine Einrichtung 150 zur Herstellung von mit einem Inhaltsstoff zu befüllenden, als Behälter ausgeführten Artikeln 02 vorgelagert sein, welche beispielsweise einen Ofen 151 für so genannte Preforms und eine Streckblaseinrichtung 152 mit einer oder mehreren Blasstationen für Artikel 02 umfassen kann (Fig. 4, Fig. 5), und/oder
   - eine Einrichtung 160 zur Befüllung beispielsweise andernorts oder vermittels der Vorrichtung 100 zuvor hergestellter, bevorzugt als Behälter ausgeführter Artikel 02 vorgelagert sein (Fig. 4, Fig. 5, Fig. 6), und/oder
   - eine Einrichtung 170 zum Verschließen zuvor befüllter, bevorzugt als Behälter ausgeführter Artikel 02 beispielsweise vermittels jeweils eines Deckels 09 vorgelagert sein (Fig. 4, Fig. 5, Fig. 6), und/oder
   - eine Einrichtung 180 zur Außenreinigung bis hin zu einer Außensterilisation zuvor hergestellter Artikel 02,
   - eine Einrichtung 180 zur Innenreinigung bis hin zu einer Innensterilisation zuvor hergestellter, mit einem Inhaltsstoff zu befüllender, bevorzugt als Behälter ausgeführter Artikel 02 vor deren Befüllung, beispielsweise ein so genannter Rinser, vorgelagert sein (Fig. 4, Fig. 5, Fig. 6), und/oder
   - eine Einrichtung 190 zur Kühlung zumindest der als Aufstandsflächen dienenden Grundflächen 05 der Artikel 02 während und/oder unmittelbar nach deren Herstellung und im Falle von als Behälter ausgeführten Artikeln 02 noch vor deren Innenreinigung und/oder Befüllung vorgelagert sein, und/oder
   - eine beispielsweise eine oder mehrere, einen Artikelstrom aus jeweils unmittelbar hintereinander fortbewegten Artikeln 02 auf mehrere Transportwege 120 aufteilende Weichen 201 umfassende Einrichtung 200 zur Vereinzelung der entlang des in Fig. 2, Fig. 4, Fig. 5 und Fig. 6 zusätzlich durch einen Pfeil 121 angedeuteten Transportwegs 120 beförderten und zu einem Gebinde 01 miteinander vermittels eines Haftmittels 03 zu verbindenden Artikel 02 durch Abtrennung Artikel 02 um Artikel 02 von mindestens einem Artikelstrom aus jeweils unmittelbar hintereinander fortbewegten Artikeln 02 vorgelagert sein (Fig. 4, Fig. 5, Fig. 6), und/oder
   - eine beispielsweise als Direktdruckanlage 211 (Fig. 4) oder als Ettikettierer 212 (Fig. 5, Fig. 6) ausgeführte Einrichtung 210 zum Versehen der Artikel 02 mit Informationen vorgelagert sein (Fig. 4, Fig. 6), und/oder
   - eine Entpalettierstation 220, welche zuvor andernorts hergestellte Artikel 02 entstapelt und/oder auspackt, vorgelagert sein (Fig. 6).
II. In Bezug auf den in Fig. 2, Fig. 4, Fig. 5 und Fig. 6 zusätzlich durch einen Pfeil 121 angedeuteten Transportweg 120 der Artikel 02 von der Trocknungseinrichtung 130 zur Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, kann der Einrichtung 110:
   - eine Einrichtung 230 zum Zusammenpressen von Artikeln 02 an deren in Bezug auf die Gesamtheit deren Klebestellen 04 zumindest zum Teil mit Haftmitteln 03 versehenen Klebestellen 04 entsprechend deren Anordnung und Ausrichtung im fertigen Gebinde 01 nachgeordnet sein, und/oder
   - eine Einrichtung, welche jeweils eine Umfassung an zuvor hergestellten Gebinden 01 anordnet, vorgesehen sein, und/oder
   - eine Einrichtung 240 zur Anordnung von Tragegriffen, welche jeweils einen Tragegriff an zuvor hergestellten Gebinden 01, beispielsweise durch Befestigung an einer zuvor angeordneten Umfassung und/oder an einem oder mehreren Artikeln 02 eines Gebindes 01 anordnet, nachgeordnet sein (Fig. 4, Fig. 5), und/oder
   - eine Gruppierstation, welche fertige Gebinde 01 zu Stapellagen gruppiert, nachgeordnet sein, und/oder
   - ein wahlweise eine Gruppierstation umfassender Palettierer 250, welcher Stapellagen an einem Stapelplatz zu einem aus mehreren Stapellagen bestehenden Stapel aufstapelt, nachgeordnet sein.

Die Ausrichtung von Artikeln 02 entsprechend deren Anordnung im fertigen Gebinde 01 erfolgt bevorzugt durch Beibehaltung und/oder Änderung der Orientierung einzelner und/oder mehrerer Artikel 02 in Bezug auf deren normal auf deren als Aufstandsflächen dienenden Grundflächen 05 aufstehenden, im Falle von Artikeln 02 in Form gerader Zylinder parallel zu deren Mittelachsen 08 verlaufenden Hochachsen, nachdem die Artikel 02 an deren Klebestellen 04 mit Haftmittel 03 versehen worden sind. Eine Beibehaltung und/oder Änderung der Orientierung erfolgt bevorzugt durch Rotation einzelner und/oder mehrerer Artikel 02 um deren im Falle von Artikeln 02 in Form gerader Zylinder parallel zu deren Mittelachsen 08 verlaufenden Hochachsen.

Das Zusammenpressen erfolgt bevorzugt mindestens so lange, bis ein eine Aushärtezeit benötigendes Haftmittel 03 eine Klebeverbindung zwischen den Artikeln 02 hergestellt hat, die einer Belastung im weiteren Umgang mit dem Gebinde 01 oder einem bis dato hergestellten Teil eines Gebindes 01 stand hält.

Die Trocknungseinrichtung 130 der Vorrichtung 100 umfasst bevorzugt eine Wärmeeintragungseinrichtung 260.

Die Wärmeeintragungseinrichtung 260 bewirkt eine im Vergleich zu einem in der Umgebung der Vorrichtung ruhenden Artikel 02 höhere Wärmeübertragung wenigstens an den Klebestellen 04 und/oder an an den Klebestellen 04 niedergeschlagener Feuchtigkeit und/oder Nässe. Die höhere Wärmeübertragung begünstigt eine beispielsweise durch Verdunstung stattfindende Trocknung. Zusammengefasst bewirkt und sicherstellt die Wärmeeintragungseinrichtung 260 damit eine Beseitigung von Feuchtigkeit und/oder Nässe wenigstens an den Klebestellen 04 auf den Oberflächen der vermittels des Haftmittels 03 zu einem Gebinde 01 miteinander zu verbindenden Artikel 02, da mit zunehmender Wärmeübertragung feuchte und/oder nasse Klebestellen 04 schneller abtrocknen.

Die Wärmeeintragungseinrichtung 260 kann bevorzugt:
- Mittel zur Wärmestrahlung zumindest auf die Klebestellen 04 und/oder auf an den Klebestellen 04 niedergeschlagene Feuchtigkeit und/oder Nässe, und/oder
- wenigstens eine Heizeinrichtung 261 (Fig. 3), welche zumindest die die entlang des Transportwegs 120 transportierten Artikel 02 umgebende Luft auf eine Temperatur oberhalb einer Temperatur in der Umgebung der Vorrichtung 100 erwärmt, und/oder
- Mittel zur Beeinflussung und Veränderung der Ausrichtung der entlang des Transportwegs 120 transportierten Artikel 02 entsprechend einer maximalen Nusselt-Zahl zumindest hinsichtlich der Klebestellen 04 und/oder an den Klebestellen 04 niedergeschlagener Feuchtigkeit und/oder an den Klebestellen 04 niedergeschlagener Nässe, und/oder
- Mittel zur beispielsweise zusätzlichen rotatorischen und/oder translatorischen Bewegung der entlang des Transportwegs 120 transportierten Artikel 02, und/oder
- Mittel 262 zur Erzeugung einer Luftströmung (Fig. 3), welche auf die entlang des Transportwegs 120 fortbewegten Artikel 02 einwirkt, und/oder
- Mittel zum Einspannen der Artikel 02 an deren Grund- und/oder Deckfläche zwecks einer rotatorischen Ausrichtung der Artikel 02
umfassen.

Beispielsweise kann die Wärmeeintragungseinrichtung 260 einen oder mehrere Heizstrahler, vorzugsweise kurz als Infrarotstrahler (IR-Strahler) bezeichnete Infrarotheizstrahler als Mittel zur Wärmestrahlung umfassen. Der oder die beispielsweise als IR-Strahler ausgeführten Heizstrahler können zumindest entlang eines Teils eines Transportwegs 120 der Artikel zu der Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, angeordnet sein.

Die mindestens eine Heizeinrichtung 261 kann beispielsweise mindestens eine Heizwendel und/oder mindestens einen Ofen und/oder mindestens einen Wärmetauscher, welcher in einem anderen Prozess, wie etwa einem von einer beispielsweise einen Ofen 151 für so genannte Preforms und eine Streckblaseinrichtung 152 umfassenden Einrichtung 150 zur Herstellung von Artikeln 02, vorzugsweise eine Einrichtung 150 zur Herstellung von mit einem Inhaltsstoff zu befüllenden, als Behälter ausgeführten Artikeln 02 ausgeführten Streckblasprozess anfallende Abwärme der Trocknungseinrichtung 130 zugänglich macht, umfassen. Die mindestens eine Heizeinrichtung und/oder mindestens ein Teil dieser kann zumindest entlang eines Teils eines Transportwegs 120 der Artikel 02 zu der Einrichtung 110, mit welcher zumindest ein Teil der Gesamtheit der Klebestellen 04 von zu einem Gebinde 01 miteinander zu verbindenden Artikeln 02 mit Haftmittel versehen werden, angeordnet sein. Die Wärme kann auch von anderen Anlagenkomponenten geliefert werden. Ohne Anspruch auf Vollständigkeit der Aufzählung kann es sich bei entsprechenden Anlagenkomponenten um ein Sudhaus und/oder einen Wärmetauscher zum Kurzzeiterhitzen eines Inhaltsstoffs, mit welchem die Artikel 02 befüllt werden, etc. handeln.

Die Mittel zur zusätzlichen rotatorischen und/oder translatorischen Bewegung der entlang des Transportwegs 120 transportierten Artikel 02 besorgen eine Erhöhung des Wärmeübergangs beispielsweise durch Rotation der Artikel 02 beispielsweise um deren normal auf deren als Aufstandsflächen dienenden Grundflächen 05 aufstehende Hochachsen, wobei gleichzeitig zu größeren Tropfen oder zu stärkeren Filmen niedergeschlagene Feuchtigkeit und/oder Nässe durch deren Trägheit abgeschüttelt wird, ähnlich Regen- und/oder Gischttropfen auf einer auch als Klarsichtscheibe oder Kent-Scheibe bezeichneten Schleuderscheibe.

Die Mittel 262 zur Erzeugung einer Luftströmung können zumindest entlang eines Teils eines Transportwegs 120 der Artikel 02 zu der Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, angeordnet sein und/oder sie können in eine solche Einrichtung 110 integriert sein. Die Luftströmung kann dabei so stark ausgebildet sein, dass sie in der Lage ist, einen oder mehrere Tropfen und/oder einen Feuchtigkeitsfilm zumindest von einer Klebestelle 04 abzulösen und mit sich zu reißen.

Die Mittel 262 zur Erzeugung einer Luftströmung, welche auf die entlang des Transportwegs 120 fortbewegten Artikel 02 einwirkt, können beispielsweise ein Gebläse und/oder beispielsweise eine oder mehrere, ein- oder beidseitig zumindest eines Teils des Transportwegs 120 der Artikel 02 angeordnete, stationäre und/oder mit den Artikeln 02 mitbewegte Düsen 263 für Kalt- und/oder Warm- und/oder Heißluft umfassen, welche - wenn mehrere entsprechende Düsen 263 vorgesehen sind - individuell ansteuerbar sein können.

Beispielsweise kann die Wärmeeintragungseinrichtung 260 mindestens ein Kalt- und/oder Warm- und/oder Heißluftgebläse als Mittel zur Erzeugung einer Luftströmung, welche auf die entlang des Transportwegs 120 fortbewegten Artikel 02 einwirkt, umfassen. Im Falle einer Ausführung als Warm- und/oder Heißluftgebläse umfassen die Mittel 262 zur Erzeugung einer Luftströmung zugleich eine Heizeinrichtung 261, welche zumindest die die entlang des Transportwegs 120 transportierten Artikel 02 umgebende Luft auf eine Temperatur oberhalb einer Temperatur in der Umgebung der Vorrichtung 100 erwärmt, oder Teile einer solchen Heizeinrichtung 261 oder werden von einer solchen Heizeinrichtung 261 oder von Teilen einer solchen Heizeinrichtung 261 umfasst.

Das mindestens eine Kalt- und/oder Warm- und/oder Heißluftgebläse und/oder eine oder mehrere, ein- oder beidseitig zumindest eines Teils des Transportwegs 120 der Artikel 02 angeordnete, stationäre und/oder mit den Artikeln 02 mitbewegten Düsen 263 für Kalt- und/oder Warm- und/oder Heißluft kann zumindest entlang eines Teils des Transportwegs 120 angeordnet sein.

Beispielsweise kann die Trocknungseinrichtung 130 etwa als Teil der Wärmeeintragungseinrichtung 260, beispielsweise etwa als Teil von Mitteln zur Beeinflussung und Veränderung der Ausrichtung der entlang des Transportwegs transportierten Artikel 02 entsprechend einer maximalen Nusselt-Zahl, Mittel zum Drehen der Artikel 02 um auf deren als Aufstandsflächen dienenden Grundflächen 05 aufstehende Hochachsen umfassen. Hierdurch kann eine zuverlässige Trocknung beispielsweise mehrerer über den Umfang eines oder mehrerer Artikel 02 verteilt angeordneter Klebestellen 04 beispielsweise vermittels nur einseitig des Transportwegs 120 angeordneter Düsen 263 sichergestellt werden.

In Verbindung beispielsweise mit einer rotatorischen Beeinflussung und Veränderung der Ausrichtung der Artikel 02 beispielsweise entsprechend einer maximalen Nusselt-Zahl und/oder entsprechend einer zusätzlichen rotatorischen und/oder translatorischen Bewegung der entlang des Transportwegs 120 transportierten Artikel 02 lässt sich so selbst unter Verzicht auf eine für einen Inhalt der Artikel 02 gegebenenfalls nachteilige Einwirkung von beispielsweise Heißluft und/oder Wärmestrahlung eine einwandfreie Trocknung vermittels eines Haftmittels 03 zu einem Gebinde 01 miteinander zu verbindender Artikel 02 unter Beseitigung von Feuchtigkeit und/oder Nässe wenigstens an deren Klebestellen 04 erzielen.

Die Trocknungseinrichtung 130 der Vorrichtung 100 umfasst vorzugsweise einen sich entlang wenigstens eines Teils des Transportwegs 120 der Artikel 02 zu und/oder im Bereich der Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, erstreckenden Tunnel 133, wie in Fig. 2, Fig. 3 b), Fig. 4, Fig. 5, Fig. 6 dargestellt.

Der Tunnel 133 verhindert das unkontrollierte Entweichen erwärmter Luft und/oder strömender Luft und/oder von Wärmestrahlung und vermindert hierdurch den Energieverbrauch der Trocknungseinrichtung 130 und damit der Vorrichtung 100. Darüber hinaus verhindert der Tunnel 133 das unkontrollierte Entweichen von Feuchtigkeit und/oder Nässe, die bei der Beseitigung von Feuchtigkeit und/oder Nässe wenigstens an den Klebestellen 04 vermittels eines Haftmittels 03 zu einem Gebinde 01 miteinander zu verbindenden Artikel 02 abgeführt werden muss.

Der Tunnel 133 kann eine oder mehrere zumindest zeitweilig verschließbare Eingangs- und/oder Ausgangsluken und/oder -schleusen umfassen.

Durch die Eingangs- und/oder Ausgangsluken und/oder -schleusen können die entlang des Transportwegs 120 fortbewegten Artikel 02 in den Tunnel 133 ein- und an dessen Ende wieder austreten, wobei die vermittels eines Haftmittels 03 zu einem Gebinde 01 miteinander zu verbindenden Artikel 02 in dem Tunnel 133 die Beseitigung von Feuchtigkeit und/oder Nässe wenigstens an den Klebestellen 04 auf ihren Oberflächen erfahren. Die Eingangs- und/oder Ausgangsluken und/oder -schleusen verringern nochmals das unkontrollierte Entweichen erwärmter Luft und/oder strömender Luft und/oder von Wärmestrahlung und senken zusätzlich den Energieverbrauch der Trocknungseinrichtung 130 und damit der Vorrichtung 100, ebenso wie sie zusätzlich ein unkontrolliertes Entweichen von Feuchtigkeit und/oder Nässe verringern, die bei der Beseitigung von Feuchtigkeit und/oder Nässe wenigstens an den Klebestellen 04 vermittels eines Haftmittels 03 zu einem Gebinde 01 miteinander zu verbindenden Artikel 02 abgeführt werden muss.

In dem Tunnel 133 können wie in Fig. 3 b) dargestellt zumindest ein oder mehrere Teile der Wärmeeintragungseinrichtung 260 angeordnet und/oder zumindest zum Teil untergebracht sein.

Zumindest ein oder, mehrere Teile der Trocknungseinrichtung 130 können in die Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, integriert sein oder von dieser umfasst sein, oder die Einrichtung 110 oder Teile derselben umfassen.

Beispielsweise können beispielsweise Klebepistolen oder Sprühdüsen 111 (Fig. 4, Fig. 5, Fig. 6) und beispielsweise IR-Strahler und/oder Düsen 263 für Kalt- und/oder Warm- und/oder Heißluft getrennt ansteuerbar beispielsweise koaxial oder nebeneinander angeordnet sein.

Umfasst die Einrichtung 110, mit welcher zumindest ein Teil der Gesamtheit der Klebestellen 04 von zu einem Gebinde 01 miteinander zu verbindenden Artikeln 02 mit Haftmittel 03 versehen werden, beispielsweise Klebepistolen oder Sprühdüsen 111, mit denen die Klebestellen 04 berührungslos mit Haftmittel 03 versehen werden, so können in diese beispielsweise Klebepistolen oder Sprühdüsen 111 eine oder mehrere Teile der Trocknungseinrichtung 130, beispielsweise IR-Strahler und/oder Düsen 263 für Kalt- und/oder Warm- und/oder Heißluft oder dergleichen intergiert sein.

Indem Teile der Trocknungseinrichtung 130 in beispielsweise eine oder mehrere Klebepistolen oder Sprühdüsen 111, mit denen die Klebestellen 04 berührungslos mit Haftmittel versehen werden, integriert sind, kann jede Klebestelle 04 unmittelbar bevor sie mit Haftmittel 03 versehen wird genau an der Stelle getrocknet werden, an welcher das Haftmittel 03 haften soll. Hierzu kann wie bereits erwähnt an oder bei einer Klebepistole oder Sprühdüse 111 ein oder mehrere Auslässe, vorzugsweise Düsen 263 für Kalt- und/oder Warm- und/oder Heißluft angeordnet sein.

Dabei ist denkbar, dass unmittelbar bevor eine Klebestelle 04 mit Haftmittel 03 versehen wird, die entsprechenden Teile der Trocknungseinrichtung 130 auf die jeweilige Klebestelle 04 einwirken. Dies hat den Vorteil, dass die Steuerung zur Positionierung eventuell mitbewegter beispielsweise Klebepistolen oder Sprühdüsen 111 permanent aktiv bleiben kann, während zum Auftrag von Haftmittel 03 nur auf einen Teil der Gesamtheit der Klebestellen 04 lediglich die Abgabe von Haftmittel 03 entsprechend gesteuert sein muss. Darüber hinaus wird nur eine Steuerung zur Ausrichtung sowie gegebenenfalls Mitbewegung entsprechender kombinierter beispielsweise Klebepistolen oder Sprühdüsen 111 sowie Heizstrahler und/oder Düsen 263 für Kalt- und/oder Warm- und/oder Heißluft benötigt.

Wichtig ist hervorzuheben, dass zumindest ein Teil der Trocknungseinrichtung 130, beispielsweise ein oder mehrere Teile der Wärmeeintragungseinrichtung 260, wie beispielsweise eine oder mehrere Düsen 263 für Kalt- und/oder Warm- und/oder Heißluft entlang zumindest eines Abschnitts des Transportwegs 120 der Artikel 02 beweglich angeordnet sein kann, und zumindest entlang des Abschnitts wenigstens zeitweilig gemeinsam mit den Artikeln 02, beispielsweise auf in den Zeichnungen nicht dargestellten Schienen, fortbewegt werden kann.

Ebenso wie das Verfahren alternativ oder zusätzlich einzelne oder eine Kombination mehrerer in Verbindung mit der Vorrichtung 100 beschriebene Merkmale und/oder einzelne oder eine Kombination mehrerer einleitend in Verbindung mit dem Stand der Technik und/oder in einem oder mehreren der zum Stand der Technik erwähnten Dokumente beschriebene Merkmale aufweisen kann, kann auch die Vorrichtung 100 alternativ oder zusätzlich einzelne oder eine Kombination mehrerer in Verbindung mit dem Verfahren beschriebene Merkmale und/oder einzelne oder eine Kombination mehrerer einleitend in Verbindung mit dem Stand der Technik und/oder in einem oder mehreren der zum Stand der Technik erwähnten Dokumente beschriebene Merkmale aufweisen.

Sowohl ein beschriebenes Verfahren, als auch eine beschriebene Vorrichtung 100 sind geeignet, die einleitend in Verbindung mit dem Stand der Technik beschriebenen Nachteile zu beseitigen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Gebinde
- 02: Artikel
- 03: Haftmittel
- 04: Klebestelle
- 05: Grundfläche
- 06: Deckfläche
- 07: Mantelfläche
- 08: Mittelachse
- 09: Deckel
- 10: Verjüngung
- 11: Klebepunkt
- 12: Klebelinie
- 100: Vorrichtung
- 110: Einrichtung, um Klebestellen 04 mit Haftmittel 03 zu versehen
- 111: Sprühdüse
- 120: Transportweg
- 121: Pfeil
- 130: Trocknungseinrichtung
- 131: Sensor
- 132: Steuerungseinrichtung
- 133: Tunnel
- 140: Einrichtung zur Reinigung
- 150: Einrichtung zur Herstellung
- 151: Ofen
- 152: Streckblaseinrichtung
- 160: Einrichtung zur Befüllung
- 170: Einrichtung zum Verschließen
- 180: Einrichtung zur Innenreinigung
- 190: Einrichtung zur Kühlung
- 200: Einrichtung zur Vereinzelung
- 201: Weiche
- 210: Einrichtung zum Versehen
- 211: Direktdruckanlage
- 212: Ettikettierer
- 220: Entpalettierstation
- 230: Einrichtung zum Zusammenführen und Zusammenpressen
- 240: Einrichtung zur Anordnung von Tragegriffen
- 250: Palettierer
- 260: Wärmeeintragungseinrichtung
- 261: Heizeinrichtung
- 262: Mittel zur Erzeugung einer Luftströmung
- 263: Düse

- H: Höhe normal über der Grundfläche 05 eines Artikels 02

## Patentansprüche

1. Vorrichtung (100) zur Herstellung von Gebinden (01) aus untereinander an Klebestellen (04) durch ein Haftmittel (03) verbundenen Artikeln (02), an welchen Klebestellen (04) die Artikel (02) im fertigen Gebinde (01) unmittelbar und/oder lediglich um das Haftmittel (03) voneinander beabstandet aneinander stoßen, umfassend eine Einrichtung (110), mit welcher zumindest ein Teil der Gesamtheit der Klebestellen (04) von zu einem Gebinde (01) miteinander zu verbindenden Artikeln (02) mit Haftmittel (03) versehen werden, **gekennzeichnet durch** eine in Bezug auf einen Transportweg (120, 121) der Artikel (02) zu der Einrichtung (110) in die Einrichtung (110) integrierte und/oder unmittelbar vor der Einrichtung (110) angeordnete Trocknungseinrichtung (130) wenigstens für die in Bezug auf deren Gesamtheit zumindest zum Teil mit Haftmittel (03) zu versehenden Klebestellen (04).

2. Vorrichtung nach Anspruch 1, wobei mindestens ein im Bereich der Trocknungseinrichtung (130) angeordneter Sensor (131) zur Erfassung von Feuchtigkeit und/oder Nässe wenigstens an den in Bezug auf deren Gesamtheit zumindest zum Teil mit Haftmittel (03) zu versehenden Klebestellen (04) vorgesehen ist, welcher Sensor (131) zumindest dem Vorhandensein und/oder dem Nichtvorhandensein von Feuchtigkeit und/oder Nässe wenigstens im Bereich der Klebestellen (04) der zu einem Gebinde (01) mittels Haftmittel (03) untereinander zu verbindendne Artikel (02) proportionale Ausgangssignale aufweist, und wobei eine mit der Trocknungseinrichtung (130) verbundene Steuerungseinrichtung (132) vorgesehen ist, welche die Ausgangssignale des mindestens einen Sensors (131) empfängt und abhängig von den Ausgangssignalen die Einwirkungsdauer und/oder die Intensität der Einwirkung wenigstens von Teilen der Trocknungseinrichtung (130) auf die einzelnen Artikel (02) steuert.

3. Vorrichtung nach Anspruch 1 oder 2, wobei in Bezug auf einen Transportweg (120, 121) der Artikel (02) von der Trocknungseinrichtung (130) zur Einrichtung (110), mit welcher zumindest ein Teil der Gesamtheit der Klebestellen (04) von zu einem Gebinde (01) miteinander zu verbindenden Artikeln (02) mit Haftmittel (03) versehen werden, der Trocknungseinrichtung (130):
- eine Einrichtung (140) zur Reinigung wenigstens der in Bezug auf deren Gesamtheit zumindest zum Teil mit Haftmittel (03) zu versehenden Klebestellen (04) der Artikel (02) vorgelagert ist, und/oder
- eine Einrichtung (150, 151, 152) zur Herstellung von Artikeln (02) vorgelagert ist, und/oder
- eine Einrichtung (160) zur Befüllung zuvor hergestellter Artikel (02) vorgelagert ist, und/oder
- eine Einrichtung (170) zum Verschließen zuvor befüllter Artikel (02) vorgelagert ist, und/oder
- eine Einrichtung (180) zur Innenreinigung bis hin zu einer Innensterilisation zuvor hergestellter, mit einem Inhaltsstoff zu befüllender, als Behälter ausgeführter Artikel (02) vor deren Befüllung vorgelagert ist, und/oder
- eine Einrichtung (190) zur Kühlung zumindest der Grundflächen (05) der Artikel (02) während und/oder unmittelbar nach deren Herstellung vorgelagert ist, und/oder
- eine Einrichtung (200) zur Vereinzelung der entlang des Transportwegs (120, 121) beförderten und zu einem Gebinde (01) miteinander vermittels eines Haftmittels (03) zu verbindenden Artikel (02) durch Abtrennung Artikel (02) um Artikel (02) von mindestens einem Artikelstrom (02) aus jeweils unmittelbar hintereinander fortbewegten Artikeln (02) vorgelagert ist, und/oder
- eine Einrichtung (210, 211, 212) zum Versehen der Artikel (02) mit Informationen vorgelagert ist.

4. Vorrichtung nach Anspruch 1, 2 oder 3, wobei in Bezug auf einen Transportweg (120, 121) der Artikel (02) von der Trocknungseinrichtung (130) zur Einrichtung (110), mit welcher zumindest ein Teil der Gesamtheit der Klebestellen (04) von zu einem Gebinde (01) miteinander zu verbindenden Artikeln (02) mit Haftmittel (03) versehen werden, der Einrichtung (110):
- eine Einrichtung (230) zum Zusammenführen und Zusammenpressen von Artikeln (02) an deren in Bezug auf die Gesamtheit deren Klebestellen (04) zumindest zum Teil mit Haftmittel (03) versehenen Klebestellen (04) entsprechend deren Anordnung und Ausrichtung im fertigen Gebinde (01), und/oder
- eine Einrichtung (240) zur Anordnung von Tragegriffen, und/oder
- ein Palettierer (250), welcher zu Stapellagen gruppierte fertige Gebinde (01) an einem Stapelplatz zu einem aus mehreren Stapellagen bestehenden Stapel aufstapelt,
nachgeordnet ist.

5. Vorrichtung nach einem der Ansprüche 1 bis 4, wobei die Trocknungseinrichtung (130) eine Wärmeeintragungseinrichtung (260) umfasst, welche zur Beseitigung von Feuchtigkeit und/oder Nässe wenigstens an den Klebestellen (04) der vermittels eines Haftmittels (03) zu einem Gebinde (01) miteinander zu verbindenden Artikel (02) eine eine Trocknung begünstigende, im Vergleich zu einem in der Umgebung der Vorrichtung (100) ruhenden Artikel (02) höhere Wärmeübertragung wenigstens an den Klebestellen (04) und/oder einer an den Klebestellen (04) niedergeschlagenen Feuchtigkeit und/oder Nässe bewirkt.

6. Vorrichtung nach Anspruch 5, wobei die Wärmeeintragungseinrichtung (260):
- Mittel zur Wärmestrahlung zumindest auf die Klebestellen (04) und/oder auf an den Klebestellen (04) niedergeschlagene Feuchtigkeit und/oder Nässe, und/oder
- wenigstens eine Heizeinrichtung (261, 263), welche zumindest die die entlang des Transportwegs (120, 121) transportierten Artikel (02) umgebende Luft auf eine Temperatur oberhalb einer Temperatur in der Umgebung der Vorrichtung (100) erwärmt, und/oder
- Mittel zur Beeinflussung und Veränderung der Ausrichtung der entlang des Transportwegs (120, 121) transportierten Artikel (02) entsprechend einer maximalen Nusselt-Zahl zumindest hinsichtlich der Klebestellen (04) und/oder an den Klebestellen (04) niedergeschlagener Feuchtigkeit und/oder an den Klebestellen (04) niedergeschlagener Nässe, und/oder
- Mittel zur rotatorischen und/oder translatorischen Bewegung der entlang des Transportwegs (120, 121) transportierten Artikel (02), und/oder
- Mittel (262, 263) zur Erzeugung einer Luftströmung, welche auf die entlang des Transportwegs (120, 121) fortbewegten Artikel (02) einwirkt
umfasst.

7. Vorrichtung nach einem der voranstehenden Ansprüche, wobei die Trocknungseinrichtung (130) einen sich entlang wenigstens eines Teils eines Transportwegs (120, 121) der Artikel (02) erstreckenden Tunnel (133) umfasst.

8. Vorrichtung nach Anspruch 7, wobei der Tunnel (133) eine oder mehrere zumindest zeitweilig verschließbare Eingangs- und/oder Ausgangsluken und/oder -schleusen umfasst.

9. Vorrichtung nach einem der Ansprüche 7 oder 8, wobei in dem Tunnel (133) zumindest ein oder mehrere Teile (261, 262, 263) der Wärmeeintragungseinrichtung (260) angeordnet und/oder zumindest zum Teil untergebracht sind.

10. Vorrichtung nach einem der voranstehenden Ansprüche, wobei zumindest ein oder mehrere Teile der Trocknungseinrichtung (130) in die Einrichtung (110), mit welcher zumindest ein Teil der Gesamtheit der Klebestellen (04) von zu einem Gebinde (01) miteinander zu verbindender Artikel (02) mit Haftmittel (03) versehen werden, integriert sind oder von dieser umfasst sind, oder die Einrichtung (110) oder Teile derselben umfassen.

11. Vorrichtung nach einem der voranstehenden Ansprüche, wobei zumindest ein Teil der Trocknungseinrichtung (130) entlang zumindest eines Abschnitts des Transportwegs (120, 121) der Artikel (02) beweglich angeordnet ist, und zumindest entlang des Abschnitts wenigstens zeitweilig gemeinsam mit den Artikeln (02) fortbewegt wird.

12. Verfahren zur Herstellung von Gebinden (01) aus untereinander an Klebestellen (04) durch ein Haftmittel (03) verbundenen Artikeln (02), an welchen Klebestellen (04) die Artikel (02) im fertigen Gebinde (01) unmittelbar und/oder lediglich um das Haftmittel (03) voneinander beabstandet aneinander stoßen, **gekennzeichnet durch** eine Trocknung wenigstens der in Bezug auf deren Gesamtheit zumindest zum Teil mit Haftmittel (03) zu versehenden Klebestellen (04) unmittelbar bevor zumindest ein Teil der Gesamtheit der Klebestellen (04) von zu einem Gebinde (01) miteinander zu verbindenden Artikeln (02) mit Haftmittel (03) versehen werden.

13. Verfahren nach Anspruch 12, wobei nachdem wenigstens zwei Artikel (02) zumindest auf einem Teil der Gesamtheit ihrer Klebestellen (04) mit Haftmittel (03) versehen worden sind, diese entsprechend ihrer späteren Anordnung im fertigen Gebinde (01) zusammengeführt und an den einander zugewandten und zumindest zum Teil mit Haftmittel (03) versehenen Klebestellen (04) aneinander gepresst werden, wobei:
- weitere, ebenfalls zu dem Gebinde (01) mit zu verbindende Artikel (02) nach und nach, sowie sie an den entsprechenden Klebestellen (04) mit Haftmittel (03) versehen sind, dem zunächst durch die ersten beiden Artikel (02) bis dato fertig gestellten Teil des Gebindes (01) zugeführt werden und an den einander zugewandten und zumindest zum Teil mit Haftmittel (03) versehenen Klebestellen (04) an den bis dato fertig gestellten Teil des Gebindes (01) gepresst werden, so dass der bis dato fertig gestellte Teil des Gebindes (01) immer weiter anwächst, bis das Gebinde (01) seine endgültige Anzahl von Artikeln (02) in der entsprechenden Anordnung erreicht hat, oder
- zunächst alle Artikel (02) zumindest an einem Teil ihrer Klebestellen (04) mit Haftmittel (03) versehen werden und anschließend alle zu einem Gebinde (01) miteinander zu verbindenden Artikel (02) zeitgleich oder zumindest annähernd zeitgleich zusammengeführt und gegeneinander gepresst werden.

14. Verfahren nach Anspruch 12 oder 13, wobei die Trocknung hinsichtlich deren Einwirkungsdauer auf die einzelnen Artikel (02) und/oder hinsichtlich der Intensität deren Einwirkung auf die einzelnen Artikel (02) abhängig von wenigstens an den in Bezug auf deren Gesamtheit zumindest zum Teil mit Haftmittel (03) zu versehenden Klebestellen (04) vorhandener Feuchtigkeit und/oder Nässe erfolgt.

15. Verfahren nach Anspruch 12, 13 oder 14, wobei.
- die Trocknung durch eine Relativbewegung der Artikel (02) gegenüber umgebender Luft erfolgt und/oder
- die Artikel (02) bei deren Bewegung so ausgerichtet werden, dass zumindest im Bereich von zu trocknenden Klebestellen (04) ein maximaler Wärmeübergang zwischen umgebender Luft und Klebestelle (04) und/oder darauf niedergeschlagener Feuchtigkeit und/oder Nässe stattfindet, und/oder
- die Trocknung eine Einwirkung von Wärmestrahlung zumindest auf die Klebestellen (04) und/oder auf die Klebestellen (04) niedergeschlagene Feuchtigkeit und/oder Nässe vorsieht, und/oder
- die Trocknung eine Erhöhung der Temperatur zumindest von an die Klebestellen (04) angrenzender Luft vorsieht, und/oder
- vor der Trocknung die zu einem Gebinde (01) miteinander vermittels eines Haftmittels (03) zu verbindenden Artikel (02) nach und nach oder zeitgleich von einem oder mehreren Artikelströmen aus jeweils unmittelbar hintereinander fortbewegten Artikeln (02) abgetrennt und/oder vereinzelt werden, und/oder
- zumindest die Hälfte der Gesamtheit der Klebestellen (04) mit Haftmittel (03) versehen werden, und/oder
- die Klebestellen (04) berührungsfrei mit Haftmittel (03) versehen werden, und/oder
- das Gebinde (01) mit einer Umfassung versehen wird, und/oder.
- das Gebinde (01) mit einem Tragegriff versehen wird, und/oder
- wenigstens ein Teil der Artikel (02) mit Informationen versehen wird, und/oder
- die Artikel (02) bevor deren Klebestellen (04) zumindest zum Teil mit Haftmittel (03) versehen werden, mit einem Inhalt befüllt werden, und/oder
- die Artikel (02) zum fertigen Gebinde (01) in einer Reihe geradlinig hintereinander, oder in rechtwinklig zueinander verlaufenden Reihen und Zeilen oder genestet angeordnet werden, und/oder
- eine Trocknung der gesamten Mantelflächen (07) der Artikel (02) und/oder der gesamten durch die Mantelflächen (07) sowie die Grund- und/oder Deckflächen (05, 06) gebildeten Oberflächen der Artikel (02) vorgesehen ist, und/oder
- eine Reinigung wenigstens der in Bezug auf deren Gesamtheit zumindest zum Teil mit Haftmittel (03) zu versehenden Klebestellen (04) der Artikel (02) vor deren Trocknung vorgesehen ist, und/oder
- eine Herstellung der Artikel (02) vorgesehen ist, und/oder
- eine Kühlung zumindest der Grundflächen (05) der Artikel (02) während und/oder unmittelbar nach der Herstellung der Artikel (02) vorgesehen ist, und/oder
- eine Innenreinigung bis hin zur Innensterilisation zuvor hergestellter, und im Anschluss an die Innenreinigung und/oder Innensterilisation mit einem Inhaltsstoff zu befüllender, als Behälter ausgeführter Artikel (02) vorgesehen ist, und/oder
- eine Befüllung zuvor hergestellter Artikel (02) vor der Trocknung der in Bezug auf deren Gesamtheit zumindest zum Teil mit Haftmittel (03) zu versehenden Klebestellen (04) der Artikel (02) vorgesehen ist, und/oder
- ein Verschließen zuvor hergestellter und befüllter Artikel (02) vor der Trocknung der in Bezug auf deren Gesamtheit zumindest zum Teil mit Haftmittel (03) zu versehenden Klebestellen (04) der Artikel (02) vorgesehen ist, und/oder
- ein Gruppieren der zuvor hergestellten Gebinde (01) zu Stapellagen vorgesehen ist, und/oder
- ein Aufstapeln zu einem aus mehreren Stapellagen bestehenden Stapel an einem Stapelplatz vorgesehen ist.

## Claims

1. An apparatus (100) for producing bundles (01) from articles (02), which are connected to each other by an adhesive agent (03) at adhesion points (04), at which the articles (02) in the finished bundle (01) abut on each other immediately and/or merely spaced apart from one another by the adhesive agent (03), the apparatus (100) comprising a device (110) by means of which at least a part of the entirety of the adhesion points (04) of articles (02) that are to be connected to each other to form a bundle (01) are provided with adhesive agent (03), **characterised by** a drying device (130) for at least the adhesion points (04) that are, in terms of their entirety, at least partly to be provided with adhesive agent (03), the drying device (130) being integrated into the device (110) and/or arranged immediately before the device (110) in relation to a transport path (120, 121) of the articles (02) to the device (110).

2. The apparatus as recited in claim 1 wherein at least one sensor (131), which is arranged in the area of the drying device (130), is provided for detecting moisture and/or wetness at least at the adhesion points (04) that are, in terms of their entirety, at least partly to be provided with adhesive agent (03), which sensor (131) has output signals, which are proportional at least to the presence and/or to the absence of moisture and/or wetness at least in the area of the adhesion points (04) of the articles (02) that are to be connected to each other by means of adhesive agent (03) to form a bundle (01), and wherein a control device (132) is provided, which is connected to the drying device (130), which control device (132) receives the output signals of the at least one sensor (131) and, based on the output signals, controls at least parts of the drying device (130) as to the exposure time and/or the exposure intensity of the individual articles (02) to the drying device (130).

3. The apparatus as recited in claim 1 or 2 wherein, arranged upstream from the drying device (130) in relation to a transport path (120, 121) of the articles (02) from the drying device (130) to the device (110) by means of which at least a part of the entirety of the adhesion points (04) of articles (02) that are to be connected to each other to form a bundle (01) are provided with adhesive agent (03), are:
- a device (140) for cleaning at least the adhesion points (04) of the articles (02) that are, in terms of their entirety, at least partly to be provided with adhesive agent (03); and/or
- a device (150, 151, 152) for producing articles (02); and/or
- a device (160) for filling previously produced articles (02); and/or
- a device (170) for closing previously filled articles (02); and/or
- a device (180) for the interior cleaning, up to the extent of interior sterilisation, prior to filling of previously produced articles (02), which are to be filled with contents and are designed as containers; and/or
- a device (190) for cooling at least the base surfaces (05) of the articles (02) during and/or immediately after their production; and/or
- a device (200) for isolating articles (02) that are being conveyed along the transport path (120, 121) and that are to be connected to each other by means of an adhesive agent (03) to form a bundle (01), by separating off article (02) for article (02) from at least one article flow (02) of articles (02) being moved along each one immediately after the other; and/or
- a device (210, 211, 212) for providing the articles (02) with information.

4. The apparatus as recited in claim 1, 2 or 3 wherein, arranged downstream from the device (110) in relation to a transport path (120, 121) of the articles (02) from the drying device (130) to the device (110) by means of which at least a part of the entirety of the adhesion points (04) of articles (02) that are to be connected to each other to form a bundle (01) are provided with adhesive agent (03), are:
- a device (230) for bringing together and for pressing together articles (02) according to their arrangement and alignment in the finished bundle (01) at adhesion points (04) of the articles (02), which adhesion points (04) have been, in terms of their entirety, at least partly provided with adhesive agent (03); and/or
- a device (240) for arranging carrying handles; and/or
- a palletiser (250), which stacks up finished bundles (01) having been grouped into stack layers to form a stack consisting of a plurality of stack layers at a stacking station.

5. The apparatus as recited in one of the claims 1 to 4 wherein the drying device (130) comprises a heat input device (260), which, for the purpose of eliminating moisture and/or wetness at least at the adhesion points (04) of the articles (02) that are to be connected to each other by means of an adhesive agent (03) to form a bundle (01), effects a heat transmission at least at the adhesion points (04) and/or at a moisture and/or wetness that has condensed at the adhesion points (04), which heat transmission is greater in comparison to an article (02) resting in the surrounding of the apparatus (100) and which heat transmission benefits drying.

6. The apparatus as recited in claim 5 wherein the heat input device (260) comprises:
- means for heat radiation at least onto the adhesion points (04) and/or onto moisture and/or wetness that has condensed at the adhesion points (04); and/or
- at least one heating device (261, 263), which heats up at least the air surrounding the articles (02) being transported along the transport path (120, 121) to a temperature above a temperature in the surrounding of the apparatus (100); and/or
- means for influencing and changing the alignment of the articles (02) being transported along the transport path (120, 121) according to a maximum Nusselt number at least with regard to the adhesion points (04) and/or to moisture that has condensed at the adhesion points (04) and/or to wetness that has condensed at the adhesion points (04); and/or
- means for the rotational and/or translational movement of the articles (02) being transported along the transport path (120, 121); and/or
- means (262, 263) for generating an airflow, which acts on the articles being moved along the transport path (120, 121).

7. The apparatus as recited in one of the previous claims wherein the drying device (130) comprises a tunnel (133) extending along at least a part of a transport path (120, 121) of the articles (02).

8. The apparatus as recited in claim 7 wherein the tunnel (133) comprises one or more at least temporarily lockable entry hatches and/or exit hatches and/or entry airlocks and/or exit airlocks.

9. The apparatus as recited in one of the claims 7 or 8 wherein at least one or more parts (261, 262, 263) of the heat input device (260) are arranged and/or at least partly accommodated in the tunnel (133).

10. The apparatus as recited in one of the previous claims wherein at least one or more parts of the drying device (130) are integrated into or comprised by the device (110) or comprise the device (110) or parts of the device (110) by means of which at least a part of the entirety of the adhesion points (04) of articles (02) that are to be connected to each other to form a bundle (01) are provided with adhesive agent (03).

11. The apparatus as recited in one of the previous claims wherein at least a part of the drying device (130) is arranged to be movable along at least a section of the transport path (120, 121) of the articles (02), and is at least temporarily moved along the section together with the articles (02).

12. A method for producing bundles (01) from articles (02), which are connected to each other by an adhesive agent (03) at adhesion points (04), at which the articles (02) in the finished bundle (01) abut on each other immediately and/or merely spaced apart from one another by the adhesive agent (03), **characterised by** a drying of at least the adhesion points (04) that are, in terms of their entirety, at least partly to be provided with adhesive agent (03) immediately before at least a part of the entirety of the adhesion points (04) of articles (02) that are to be connected to each other to form a bundle (01) are provided with adhesive agent (03).

13. The method as recited in claim 12 wherein, after at least two articles (02) have been provided with adhesive agent (03) at least on a part of the entirety of their adhesion points (04), these articles (02) are brought together according to their later arrangement in the finished bundle (01) and pressed together at the adhesion points (04) facing toward each other and at least partly having been provided with adhesive agent (03), wherein:
- further articles (02) that are also to be connected to the bundle (01) are by and by, as they have been provided with adhesive agent (03) at the appropriate adhesion points (04), first fed to the part of the bundle (01) that has been finished so far by the first two articles (02), and they are pressed to the part of the bundle (01) that has been finished so far at the adhesion points (04) facing toward each other and at least partly provided with adhesive agent (03) such that the part of the bundle (01) that has been finished so far continuously grows until the bundle (01) has reached its final number of articles (02) in the appropriate arrangement; or
- first all articles (02) are provided with adhesive agent (03) at least at a part of their adhesion points (04) and subsequently all articles (02) that are to be connected to each other to form a bundle (01) are brought together and pressed against each other simultaneously or at least nearly simultaneously.

14. The method as recited in claim 12 or 13 wherein drying, with regard to the exposure time of the individual articles (02) to the drying and/or with regard to the exposure intensity of the individual articles (02) to the drying, is carried out based on the moisture and/or the wetness that is present at least at the adhesion points (04) that are, in terms of their entirety, at least partly to be provided with adhesive agent (03).

15. The method as recited in claim 12, 13 or 14 wherein:
- the drying is carried out by a relative movement of the articles (02) in relation to the surrounding air; and/or
- the articles (02) are aligned in their movement such that a maximum heat transfer between the surrounding air and the adhesion point (04) and/or the moisture and/or wetness that has condensed thereon takes place at least in the area of the adhesion points (04) to be dried; and/or
- the drying provides an exposure to heat radiation at least of the adhesion points (04) and/or of moisture and/or wetness that has condensed at the adhesion points (04); and/or
- the drying provides an increase of the temperature at least of the air adjacent to the adhesion points (04); and/or
- the articles (02) that are to be connected to each other by means of an adhesive agent (03) to form a bundle (01) are, prior to the drying, by and by or simultaneously separated off and/or isolated from one or more article flows of articles (02) being moved along each one immediately after the other; and/or
- at least half of the entirety of the adhesion points (04) are provided with adhesive agent (03); and/or
- the adhesion points (04) are provided with adhesive agent (03) in a contact-free manner; and/or
- the bundle (01) is provided with a strapping; and/or
- the bundle (01) is provided with a carrying handle; and/or
- at least a part of the articles (02) is provided with information; and/or
- the articles (02) are filled with contents before their adhesion points (04) are at least partly provided with adhesive agent (03); and/or
- the articles (02) are arranged to form a finished bundle (01) in a straight row one after the other, or in rows and lines running at right angles to each other, or in a nested arrangement; and/or
- drying is provided for the entire shell surfaces (07) of the articles (02) and/or for the entire surfaces of the articles (02), the surfaces being formed by the shell surfaces (07) and by the base surfaces and/or cover surfaces (05, 06); and/or
- cleaning is provided prior to the drying at least for the adhesion points (04) of the articles (02) that are, in terms of their entirety, at least partly to be provided with adhesive agent (03); and/or
- producing the articles (02) is provided; and/or
- cooling is provided at least for the base surfaces (05) of the articles (02) during and/or immediately after producing the articles (02); and/or
- interior cleaning, up to the extent of interior sterilisation, is provided for the articles (02) designed as containers, which have been previously produced and which are to be filled with contents subsequent to the interior cleaning and/or interior sterilisation; and/or
- filling previously produced articles (02) is provided prior to drying the adhesion points (04) of the articles (02) that are, in terms of their entirety, at least partly to be provided with adhesive agent (03); and/or
- closing previously produced and filled articles (02) is provided prior to drying the adhesion points (04) of the articles (02) that are, in terms of their entirety, at least partly to be provided with adhesive agent (03); and/or
- grouping is provided in order to form stack layers of the previously produced bundles (01); and/or
- stacking up stacks consisting of a plurality of stack layers is provided at a stacking station.

## Revendications

1. Dispositif (100) de réalisation de multipacks (01) à partir d'articles (02) qui sont reliés les uns aux autres, sur des points de collage (04), par l'intermédiaire d'un adhésif (03), points de collage (04) sur lesquels les articles (02) dans le multipack (01) fini sont en contact entre eux directement et/ou de manière à être espacés les uns des autres uniquement par ledit adhésif (03), comprenant un dispositif (110) par le biais duquel au moins une partie de l'ensemble des points de collage (04) d'articles (02) à relier entre eux pour former un multipack (01) est pourvue d'adhésif (03), **caractérisé par** un dispositif de séchage (130) au moins pour les points de collage (04) à munir d'adhésif (03) au moins en partie par rapport à leur ensemble, qui, par rapport à un chemin de transport (120, 121) des articles (02) vers le dispositif (110), est intégré dans le dispositif (110) et/ou est disposé directement en amont du dispositif (110).

2. Dispositif selon la revendication 1, dans lequel au moins un capteur (131) destiné à détecter de l'humidité et/ou de l'humidité importante au moins sur les points de collage (04) à munir d'adhésif (03) au moins en partie par rapport à leur ensemble et disposé au niveau du dispositif de séchage (130) est prévu, ledit capteur (131) présente des signaux de sortie proportionnels au moins à la présence et/ou à l'absence d'humidité et/ou d'humidité importante au moins au niveau des points de collage (04) des articles (02) à relier entre eux au moyen d'adhésif (03) pour former un multipack (01), et dans lequel un dispositif de commande (132) relié au dispositif de séchage (130) est prévu qui reçoit les signaux de sortie dudit au moins un capteur (131) et commande, en fonction des signaux de sortie, la durée d'action et/ou l'intensité de l'action au moins de parties du dispositif de séchage (130) sur les articles (02) individuels.

3. Dispositif selon la revendication 1 ou 2, dans lequel, par rapport à un chemin de transport (120, 121) des articles (02) depuis le dispositif de séchage (130) vers le dispositif (110) par le biais duquel au moins une partie de l'ensemble des points de collage (04) d'articles (02) à relier entre eux pour former un multipack (01) est pourvue d'adhésif (03), est/sont disposé(s), en amont du dispositif de séchage (130):
- un dispositif (140) de nettoyage au moins des points de collage (04) des articles (02), qui sont à munir d'adhésif (03) au moins en partie par rapport à leur ensemble, et/ou
- un dispositif (150, 151, 152) de fabrication d'articles (02) et/ou
- un dispositif (160) de remplissage d'articles (02) précédemment produits et/ou
- un dispositif (170) de fermeture d'articles (02) précédemment remplis et/ou
- un dispositif (180) de nettoyage intérieur, allant jusqu'à une stérilisation intérieure, d'articles (02) précédemment produits, à remplir d'une substance et réalisés en tant que récipients, avant le remplissage de ceux-ci, et/ou
- un dispositif (190) de refroidissement au moins des bases (05) des articles (02) durant et/ou immédiatement après leur fabrication, et/ou
- un dispositif (200) pour individualiser les articles (02) transportés le long du chemin de transport (120, 121) et à relier entre eux par l'intermédiaire d'un adhésif (03) pour former un multipack (01), en séparant un à un les articles (02) d'au moins un flux d'articles (02) se composant d'articles (02) déplacés respectivement directement les uns derrière les autres, et/ou
- un dispositif (210, 211, 212) destiné à munir les articles (02) d'informations.

4. Dispositif selon la revendication 1, 2 ou 3, dans lequel, par rapport à un chemin de transport (120, 121) des articles (02) depuis le dispositif de séchage (130) vers le dispositif (110) par le biais duquel au moins une partie de l'ensemble des points de collage (04) d'articles (02) à relier entre eux pour former un multipack (01) est pourvue d'adhésif (03), est/sont disposé(s), en aval du dispositif (110):
- un dispositif (230) destiné à réunir et à presser ensemble des articles (02) sur leurs points de collage (04) munis d'adhésif (03) au moins en partie par rapport à l'ensemble de leurs points de collage (04), en fonction de leurs disposition et orientation dans le multipack (01) fini, et/ou
- un dispositif (240) de disposition de poignées de transport et/ou
- un dispositif de palettisation (250) qui empile, sur un emplacement d'empilage, des multipacks (01) finis regroupés en couches à empiler pour obtenir une pile se composant d'une pluralité de couches à empiler.

5. Dispositif selon l'une quelconque des revendications 1 à 4, dans lequel ledit dispositif de séchage (130) comprend un dispositif d'introduction de chaleur (260) qui, pour éliminer de l'humidité et/ou de l'humidité importante, au moins sur les points de collage (04) des articles (02) à relier entre eux par l'intermédiaire d'un adhésif (03) pour former un multipack (01), provoque un transfert de chaleur au moins sur les points de collage (04) et/ou sur une humidité et/ou humidité importante qui s'est déposée sur les points de collage (04), lequel favorise un séchage et est plus important en comparaison d'un article (02) reposant aux environs du dispositif (100).

6. Dispositif selon la revendication 5, dans lequel le dispositif d'introduction de chaleur (260) comprend:
- des moyens destinés à rayonner de la chaleur au moins sur les points de collage (04) et/ou sur une humidité et/ou humidité importante qui s'est déposée sur les points de collage (04), et/ou
- au moins un dispositif de chauffage (261, 263) qui chauffe au moins l'air entourant les articles (02) transportés le long du chemin de transport (120, 121), à une température supérieure à une température dans les environs du dispositif (100), et/ou
- des moyens destinés à influencer et à modifier l'orientation des articles (02) transportés le long du chemin de transport (120, 121), en fonction d'un nombre de Nusselt maximal, au moins en ce qui concerne les points de collage (04) et/ou une humidité qui s'est déposée sur les points de collage (04) et/ou une humidité importante qui s'est déposée sur les points de collage (04), et/ou
- des moyens destinés à déplacer en rotation et/ou en translation les articles (02) transportés le long du chemin de transport (120, 121), et/ou
- des moyens (262, 263) de génération d'un courant d'air qui agit sur les articles (02) déplacés le long du chemin de transport (120, 121).

7. Dispositif selon l'une quelconque des revendications précédentes, dans lequel ledit dispositif de séchage (130) comprend un tunnel (133) s'étendant le long d'au moins une partie d'un chemin de transport (120, 121) des articles (02).

8. Dispositif selon la revendication 7, dans lequel ledit tunnel (133) comprend une ou plusieurs trappe(s) et/ou écluse(s) d'entrée et/ou de sortie apte(s) à être fermée(s) au moins temporairement.

9. Dispositif selon l'une quelconque des revendications 7 ou 8, dans lequel au moins une ou plusieurs parties (261, 262, 263) du dispositif d'introduction de chaleur (260) sont disposées et/ou logées au moins en partie dans ledit tunnel (133).

10. Dispositif selon l'une quelconque des revendications précédentes, dans lequel au moins une ou plusieurs parties du dispositif de séchage (130) sont intégrées dans ledit dispositif (110) par le biais duquel au moins une partie de l'ensemble des points de collage (04) d'articles (02) à relier entre eux pour former un multipack (01) est pourvue d'adhésif (03), ou sont comprises par celui-ci ou comprennent ledit dispositif (110) ou des parties de celui-ci.

11. Dispositif selon l'une quelconque des revendications précédentes, dans lequel au moins une partie du dispositif de séchage (130) est disposée de manière mobile le long d'au moins une section du chemin de transport (120, 121) des articles (02) et est déplacée, au moins temporairement, conjointement avec les articles (02) au moins le long de ladite section.

12. Procédé de réalisation de multipacks (01) à partir d'articles (02) qui sont reliés les uns aux autres, sur des points de collage (04), par l'intermédiaire d'un adhésif (03), points de collage (04) sur lesquels les articles (02) dans le multipack (01) fini sont en contact entre eux directement et/ou de manière à être espacés les uns des autres uniquement par ledit adhésif (03), **caractérisé par** un séchage au moins des points de collage (04) à munir d'adhésif (03) au moins en partie par rapport à leur ensemble, immédiatement avant de munir d'adhésif (03) au moins une partie de l'ensemble des points de collage (04) d'articles (02) à relier entre eux pour former un multipack (01).

13. Procédé selon la revendication 12, dans lequel, après qu'au moins deux articles (02) ont été pourvus d'adhésif (03) au moins sur une partie de l'ensemble de leurs points de collage (04), ceux-ci sont réunis et pressés les uns contre les autres sur les points de collage (04) tournés les uns vers les autres et pourvus d'adhésif (03) au moins en partie, en fonction de leur disposition ultérieure dans le multipack (01) fini, dans lequel:
- d'autres articles (02) à relier eux aussi pour former le multipack (01) sont amenés peu à peu, dès qu'ils sont pourvus d'adhésif (03) sur les points de collage (04) correspondants, à la partie du multipack (01) finie d'abord jusqu'ici par les deux premiers articles (02) et sont pressés, sur les points de collage (04) tournés les uns vers les autres et pourvus d'adhésif (03) au moins en partie, contre la partie du multipack (01) finie jusqu'ici, de sorte que la partie du multipack (01) finie jusqu'ici devient de plus en plus grande jusqu'à ce que le multipack (01) ait atteint son nombre final d'articles (02) dans la disposition correspondante, ou,
- d'abord, tous les articles (02) sont pourvus d'adhésif (03) au moins sur une partie de leurs points de collage (04) et, ensuite, tous les articles (02) à relier entre eux pour former un multipack (01) sont réunis et pressés les uns contre les autres simultanément ou au moins approximativement en même temps.

14. Procédé selon la revendication 12 ou 13, dans lequel le séchage, en ce qui concerne sa durée d'action sur les articles individuels (02) et/ou en ce qui concerne l'intensité de son action sur les articles (02) individuels, se fait en fonction d'humidité et/ou d'humidité importante qui est présente au moins sur les points de collage (04) à munir d'adhésif (03) au moins en partie par rapport à leur ensemble.

15. Procédé selon la revendication 12, 13 ou 14, dans lequel:
- le séchage se fait par un mouvement relatif des articles (02) par rapport à de l'air ambiant, et/ou
- les articles (02) sont orientés lors de leur déplacement de telle sorte que, au moins au niveau de points de collage (04) à sécher, il y a un transfert de chaleur maximal entre l'air ambiant et le point de collage (04) et/ou de l'humidité et/ou humidité importante qui s'est déposée sur celui-ci, et/ou
- le séchage prévoit une action de rayonnement thermique au moins sur les points de collage (04) et/ou sur de l'humidité et/ou humidité importante qui s'est déposée sur les points de collage (04), et/ou
- le séchage prévoit une augmentation de la température au moins d'air contigu aux points de collage (04), et/ou,
- avant le séchage, les articles (02) à relier entre eux par l'intermédiaire d'un adhésif (03) pour former un multipack (01) sont séparés et/ou individualisés, peu à peu ou simultanément, d'un ou de plusieurs flux d'articles se composant d'articles (02) déplacés respectivement directement les uns derrière les autres, et/ou
- au moins la moitié de l'ensemble des points de collage (04) est pourvue d'adhésif (03), et/ou
- les points de collage (04) sont pourvus sans contact d'adhésif (03), et/ou
- le multipack (01) est muni d'un enveloppement, et/ou
- le multipack (01) est muni d'une poignée de transport, et/ou
- au moins une partie des articles (02) est munie d'informations, et/ou
- les articles (02), avant de munir leurs points de collage (04), au moins en partie, d'adhésif (03), sont remplis d'une substance, et/ou
- les articles (02), pour former le multipack (01) fini, sont disposés à la ligne rectilignement les uns derrière les autres ou en rangées et lignes s'étendant à angle droit les unes aux autres, ou de manière imbriquée, et/ou
- on prévoit un séchage de l'ensemble des surfaces latérales (07) des articles (02) et/ou de l'ensemble des surfaces des articles (02) formées par les surfaces latérales (07) ainsi que par les bases et/ou les surfaces supérieures (05, 06), et/ou
- on prévoit un nettoyage au moins des points de collage (04) des articles (02), à munir d'adhésif (03) au moins en partie par rapport à leur ensemble, avant de sécher ceux-ci, et/ou
- on prévoit une fabrication des articles (02), et/ou
- on prévoit un refroidissement au moins des bases (05) des articles (02) durant et/ou immédiatement après la fabrication des articles (02), et/ou
- on prévoit un nettoyage intérieur, allant jusqu'à la stérilisation intérieure, d'articles (02) précédemment produits et à remplir d'une substance suite au nettoyage intérieur et/ou à la stérilisation intérieure et réalisés en tant que récipients, et/ou
- on prévoit un remplissage d'articles (02) précédemment produits, avant le séchage des points de collage (04) des articles (02) qui sont à munir d'adhésif (03) au moins en partie par rapport à leur ensemble, et/ou
- on prévoit une fermeture d'articles (02) précédemment produits et remplis, avant le séchage des points de collage (04) des articles (02) qui sont à munir d'adhésif (03) au moins en partie par rapport à leur ensemble, et/ou
- on prévoit un groupement des multipacks (01) précédemment réalisés pour former des couches à empiler, et/ou
- on prévoit un empilage, sur un emplacement d'empilage, pour obtenir une pile se composant d'une pluralité de couches à empiler.
